# EUROPÄISCHE PATENTSCHRIFT

(11) **EP 3 766 744 B1**
(45) Veröffentlichungstag und Bekanntmachung des Hinweises auf die Patenterteilung: **02.04.2025**
(21) Anmeldenummer: 20184164.0
(22) Anmeldetag: 06.07.2020
(51) Int. Cl.: B60R 21/0134, G08G 1/00, G08G 1/16, G08G 1/04, B60R 21/01

(54) **AUSLÖSEN ZUMINDEST EINES AUFPRALLKISSENS EINES UNBEMANNTEN FAHRZEUGS**
TRIGGERING OF AT LEAST ONE IMPACT AIR BAG OF AN UNMANNED VEHICLE
DÉCLENCHEMENT D'AU MOINS UN COUSSIN GONFLABLE D'UN VÉHICULE SANS ÉQUIPAGE

(30) Priorität: 15.07.2019 DE 102019119093
(43) Veröffentlichungstag der Anmeldung: 20.01.2021
(73) Patentinhaber: Deutsche Post AG, 53113 Bonn (DE)
(72) Erfinder: Radetzki, Uwe, 53127 Bonn (DE); Kong, Dong Uck, 53127 Bonn (DE); Trendafilov, Boris, 53757 Sankt Augustin (DE); Bischoff, Heike, 51143 Köln (DE); Drees, Sandra, 53639 Königswinter (DE)
(74) Vertreter: Cohausz & Florack

(56) Entgegenhaltungen:
- EP-A1- 3 312 810
- WO-A1-2010/040376
- DE-B3- 10 327 115
- JP-A- 2017 124 809
- DEUTSCHER BUSSGELDKATALOG: "Fußgängerzone & Fußgängerbereich | Bussgeldkataloge.de", 27 August 2023 (2023-08-27), XP093082434, Retrieved from the Internet <URL:https://www.bussgeldkataloge.de/fussgaengerzone/> [retrieved on 20230915]

## Beschreibung

### Gebiet

Beispielhafte Ausführungsformen der Erfindung betreffen ein Verfahren, eine Vorrichtung und ein Computerprogramm zum Auslösen zumindest eines Aufprallkissens für ein unbemanntes Fahrzeug.

### Hintergrund

Im Stand der Technik sind unbemannte Fahrzeuge mit einem Mittel zum Aufnehmen und Transportieren einer oder mehrerer Sendungen bekannt. Ein solches unbemanntes Fahrzeug bewegt sich beispielsweise autonom oder teilautonom (z.B. in einem follow-me-Modus hinter einer Person oder per Fernsteuerung) auf Gehwegen, Fahrradwegen und Straßen. Dabei überquert es Straßen, fährt hinter Hausecken hervor oder biegt um Kurven. Beispielsweise wegen der geringen Höhe des unbemannten Fahrzeugs (z.B. im Vergleich zu einem aufrechtgehenden Menschen) wird es leicht von anderen Verkehrsteilnehmern, beispielsweise Fußgänger oder Fahrradfahrer, übersehen. Es besteht demnach ein erhöhtes Risiko für eine Kollision zwischen einem solchen unbemannten Fahrzeug und übrigen Verkehrsteilnehmern. Damit einhergehend besteht eine erhöhte Gefahr, dass im Falle einer Kollision das beteiligte unbemannte Fahrzeug oder der beteiligte übrige Verkehrsteilnehmer Schaden nimmt.

EP 3 312 810 A1 offenbart ein Verfahren zum Abwehren einer Gefährdung. WO 2010/040376 A1 offenbart ein Verfahren zur Minderung von Kollisionsrisiken.

### Zusammenfassung einiger beispielhafter Ausführungsformen der Erfindung

Die vorliegende Erfindung hat sich daher unter anderem die Aufgabe gestellt, ein Verfahren, eine Vorrichtung, ein System und ein Computerprogramm zum Auslösen zumindest eines Aufprallkissens eines unbemannten Fahrzeugs bereitzustellen.

Gemäß der Erfindung wird ein Verfahren gemäß Anspruch 1 offenbart.

Das offenbarte Verfahren wird von einer Vorrichtung ausgeführt, beispielsweise der im Folgenden offenbarten Vorrichtung.

Gemäß der Erfindung wird eine Vorrichtung offenbart, wobei die Vorrichtung Mittel eingerichtet zur Ausführung des offenbarten Verfahrens oder jeweilige Mittel zur Ausführung der Schritte des offenbarten Verfahrens umfasst. Dabei können ein oder mehrere Schritte von den gleichen Mitteln oder verschiedene Schritte von verschiedenen Mitteln ausgeführt werden. Die Mittel der offenbarten Vorrichtung können Hardware- und/oder Software-Komponenten umfassen.

Die Mittel können beispielsweise mindestens einen Speicher mit Programmanweisungen eines Computerprogramms (z.B. des im Folgenden offenbarten Computerprogramms ) und mindestens einen Prozessor ausgebildet zum Ausführen von Programmanweisungen aus dem mindestens einen Speicher umfassen. Dementsprechend soll auch eine Vorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Vorrichtung zu veranlassen, das offenbarte Verfahren auszuführen und/oder zu steuern. Alternativ oder zusätzlich können die Mittel der Vorrichtung beispielsweise ferner eine oder mehrere drahtlose und/oder drahtgebundene Kommunikationsschnittstellen (z.B. eine oder mehrere drahtlose und/oder drahtgebundene Netzwerkadapter) und/oder eine oder mehrere Benutzerschnittstellen (z.B. eine Tastatur, eine Maus, einen Bildschirm, einen berührungsempfindlichen Bildschirm, einen Lautsprecher, ein Mikrofon, eine Kamera usw.) umfassen.

Zum Beispiel umfasst die Vorrichtung ferner zumindest einen Sensor, der eingerichtet ist, eine Sensorinformation zu erfassen. Alternativ oder zusätzlich ist die Vorrichtung beispielsweise eingerichtet, Sensorinformationen von einem oder mehreren Sensoren des unbemannten Fahrzeugs zu erhalten. Dabei sind die Sensoren des unbemannten Fahrzeugs beispielsweise extern von der Vorrichtung (d.h. kein Teil der Vorrichtung). Zum Beispiel ist die Vorrichtung unmittelbar oder mittelbar mit den Sensoren des unbemannten Fahrzeugs kommunikativ verbunden. Ein Beispiel für einen solchen Sensor ist ein Umgebungssensor, der eingerichtet ist, eine Umgebung des unbemannten Fahrzeugs zumindest teilweise zu überwachen und eine Sensorinformation (z.B. eine Sensorinformation, die zumindest einen Objektparameter eines Objekts, das sich in Bezug auf das unbemannte Fahrzeug bewegt und in der Umgebung des unbemannten Fahrzeugs befindet, repräsentiert) zu erfassen. Ein weiteres Beispiel für einen solchen Sensor ist ein Fahrzeugsensor, der eingerichtet, ist eine Fahrzeuginformation, die einen Fahrzeugparameter (z.B. eine Beschleunigung oder Geschwindigkeit) des unbemannten Fahrzeugs repräsentiert, zu erfassen.

Darüber hinaus ist die Vorrichtung zum Beispiel unmittelbar oder mittelbar mit zumindest einem Aufprallkissen des unbemannten Fahrzeugs kommunikativ verbunden, sodass die Vorrichtung beispielsweise ein Auslösen des zumindest einen Aufprallkissens bewirken kann.

Dass die offenbarte Vorrichtung beispielsweise jeweils mit einem Sensor (z.B. einem Objektsensor oder einem Fahrzeugsensor) und einem Aufprallkissen des unbemannten Fahrzeugs kommunikativ verbunden ist, kann zum Beispiel so verstanden werden, dass die Verbindung zwischen der Vorrichtung und der jeweiligen Komponente (d.h. Sensor und/oder Aufprallkissen) eine drahtgebundene und/oder drahtlose Kommunikationsverbindung (z.B. zur Informationsübertragung) ist. Zu diesem Zweck umfasst die Vorrichtung beispielsweise eine oder mehrere drahtlose und/oder drahtgebundene Kommunikationsschnittstellen (z.B. eine oder mehrere drahtlose und/oder drahtgebundene Netzwerkadapter).

Ferner kann die Vorrichtung eine oder mehrere Benutzerschnittstellen (z.B. eine Tastatur, eine Maus, einen Bildschirm, einen berührungsempfindlichen Bildschirm, einen Lautsprecher, ein Mikrofon, eine Kamera usw.) umfassen.

Zum Beispiel ist die Vorrichtung eine Vorrichtung für das unbemannte Fahrzeug, oder ein Modul für das unbemannte Fahrzeug, oder ein Teil des unbemannten Fahrzeugs, beispielsweise indem die Vorrichtung in dem unbemannten Fahrzeug verbaut ist. Dabei kann es sich bei der Vorrichtung beispielsweise um eine Steuervorrichtung oder ein Steuermodul für das unbemannte Fahrzeug handeln.

In dem Beispiel, dass die Vorrichtung ein Teil des unbemannten Fahrzeugs ist, kann die Vorrichtung zum Beispiel an die Energieversorgung des unbemannten Fahrzeugs angeschlossen sein. Alternativ oder zusätzlich kann die Vorrichtung auch eine eigene Stromversorgung in Form eines eigenen Energiespeichers wie einer Batterie und/oder eines Kondensators umfassen. Die vorrichtungseigene Energieversorgung könnte beispielsweise als Ersatzstromversorgung dienen. Auf diese Weise ist der Betrieb der Vorrichtung auch bei einem Ausfall der Stromversorgung des unbemannten Fahrzeugs möglich.

Mit der Vorrichtung als Teil des unbemannten Fahrzeugs ist es darüber hinaus beispielsweise möglich, die Vorrichtung zu deaktivieren (z.B. manuell oder automatisch) und das unbemannte Fahrzeug unabhängig von der offenbarten Verwendung der Vorrichtung zu verwenden. Dies ist beispielsweise vorteilhaft in Situationen, in denen von der Vorrichtung ausgeführte Verfahrensschritte, insbesondere das Auslösen eines Aufprallkissens, nicht erwünscht sind.

Gemäß einem weiteren Beispiel ist die Vorrichtung ein Server, beispielsweise ein von dem unbemannten Fahrzeug entfernter Server (d.h. ein Server, der kein Teil des unbemannten Fahrzeugs ist). Ein solcher Server kann zum Beispiel sowohl ein physikalischer Server (d.h. ein Server mit Hardware- und/oder Software-Komponenten) als auch ein virtueller Server sein. Dabei soll unter einem virtuellen Server beispielsweise eine durch Hardware- und/oder Software-Komponenten eines oder mehrerer physikalischer Server (z.B. mehrere Server einer sogenannten Servercloud) bereitgestellte Serverfunktionalität verstanden werden, indem die mehreren physikalischen Server beispielsweise zusammenwirken, um die Funktionalität des virtuellen Servers bereitzustellen.

Gemäß der Erfindung wird ferner ein System offenbart, wobei das System umfasst:
- das offenbarte unbemannte Fahrzeug, und
- die offenbarte Vorrichtung, wobei die Vorrichtung ein von dem unbemannten Fahrzeug entfernter Server ist.

Gemäß der Erfindung wird ferner ein Computerprogramm offenbart, wobei das Computerprogramm Programmanweisungen umfasst, die dazu ausgebildet sind, bei Ausführung durch mindestens einen Prozessor eine Vorrichtung (z.B. die offenbarte Vorrichtung) zu veranlassen, das offenbarte Verfahren auszuführen.

Das offenbarte Computerprogramm ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden. Es versteht sich, dass die Erfindung hierauf nicht beschränkt ist und das Speichermedium alternativ auch ein virtuelles Speichermedium sein kann, dass beispielsweise durch mehrere physische Speicher gebildet wird.

Im Folgenden werden die Merkmale des offenbarten Verfahrens, der offenbarten Vorrichtung(en), des offenbarten Computerprogramms und des offenbarten Systems - teilweise beispielhaft - beschrieben.

Unter dem unbemannten Fahrzeug soll ein Landfahrzeug verstanden werden, das am Landverkehr, in Fußgängerbereichen auf Gehwegen, teilnimmt. Das unbemannte Fahrzeug weist weder einen Fahrer noch Passagiere auf. Zum Beispiel ist das unbemannte Fahrzeug eingerichtet sich zumindest teilweise autonom und/oder automatisch und/oder ferngesteuert fortzubewegen. Beispielsweise handelt es sich bei dem unbemannten Fahrzeug um einen Roboter und/oder eine Drohne.

Das unbemannte Fahrzeug umfasst zumindest das Aufprallkissen, das beispielsweise an einer Außenseite des unbemannten Fahrzeugs angeordnet ist und/oder sich nach außen hin öffnet und/oder entfaltet (d.h. sich von einer Außenseite des unbemannten Fahrzeugs weg öffnet und/oder entfaltet), wenn es ausgelöst wird. Ein Aufprallkissen kann beispielsweise zumindest teilweise durch einen Fluidsack gebildet werden, der, wenn das Aufprallkissen ausgelöst wird, mit einem Fluid gefüllt wird und sich dadurch öffnet und/oder entfaltet. Ein Beispiel für ein solches Aufprallkissen ist eine Airbagvorrichtung umfassend einen Gassack (z.B. einem Kunststoffsack, insbesondere einem Nylonsack) und einen Gasgenerator, wobei die Airbagvorrichtung eingerichtet ist, wenn sie ausgelöst wird, den Gassack mit von dem Gasgenerator erzeugten Gas zu befüllen. Der Gasgenerator ist beispielsweise ein pyrotechnischer Gasgenerator, ein Kaltgasgenerator oder ein Hybridgasgenerator. Zum Beispiel umfasst ein solcher Gasgenerator eine Anzündeeinheit und eine oder mehrere Treibladungen (z.B. ein Festtreibstoff, welcher in Tablettenform vorliegt). Zum Beispiel entzündet die Anzündeeinheit beim Auslösen des Airbags (z.B. über einen Strompuls) eine oder mehrere der Treibladungen, sodass es zu einer Gasentwicklung kommt, welche zu der Befüllung des Gassacks mit Gas führt. Durch das Vorsehen mehrerer Treibladungen in dem Gasgenerator kann eine Airbagvorrichtung mit verschiedenen Auslöseintensitäten ausgelöst werden. Dabei entspricht die geringste Auslöseintensität beispielsweise dem Fall, dass lediglich eine Treibladung gezündet wird, und die höchste Auslöseintensität entspricht beispielsweise dem Fall, dass alle Treibladungen gezündet werden.

Ferner umfasst das unbemannte Fahrzeug zumindest einen Sensor, der eingerichtet ist, eine Sensorinformation (z.B. eine Sensorinformation, die zumindest einen Objektparameter eines Objekts, das sich in Bezug auf das unbemannte Fahrzeug bewegt, repräsentiert oder eine Fahrzeuginformation) zu erfassen. Wie oben offenbart, kann ein Sensor des unbemannten Fahrzeugs ein Sensor der Vorrichtung oder extern von der Vorrichtung sein. Ferner kann der Sensor des unbemannten Fahrzeugs ein Sensor einer Mehrzahl von Sensoren des unbemannten Fahrzeugs sein. Zum Beispiel können die Sensoren einer solchen Mehrzahl von Sensor zumindest teilweise verschiedene Sensoren sein und/oder zumindest teilweise an unterschiedlichen Stellen (z.B. an unterschiedlichen Seiten) des unbemannten Fahrzeugs angeordnet sein.

Zum Beispiel kann eine durch einen Sensor (z.B. den Umgebungssensor oder einen Fahrzeugsensor) des unbemannten Fahrzeugs erfasste Sensorinformation, wenn der Sensor auch Teil der Vorrichtung ist, durch das Erfassen der Sensorinformation durch den zumindest einen Sensor durch die Vorrichtung erhalten werden. Alternativ kann eine durch einen Sensor (z.B. den Umgebungssensor oder einen Fahrzeugsensor) des unbemannten Fahrzeugs erfasste Sensorinformation, wenn der Sensor kein Teil der Vorrichtung ist, durch das Empfangen der Sensorinformation von dem Sensor (z.B. über eine Kommunikationsverbindung) durch die Vorrichtung erhalten werden.

Unter dem Bewirken des Erhaltens einer durch einen Sensor des unbemannten Fahrzeugs erfassten Sensorinformation soll beispielsweise verstanden werden, dass die Vorrichtung das unbemannte Fahrzeug und/oder den Sensor derart (z.B. mittels einer Steuerinformation) ansteuert, dass das unbemannte Fahrzeug und/oder der Sensor die Sensorinformation erfasst und der Vorrichtung bereitstellt (z.B. über eine Kommunikationsverbindung an die Vorrichtung sendet), sodass die Vorrichtung die Information erhält. Zu diesem Zweck weisen die Vorrichtung und das unbemannte Fahrzeug beispielsweise entsprechend eingerichtete Kommunikationsschnittstellen auf.

Unter einer durch einen Sensor des unbemannten Fahrzeugs erfassten Sensorinformation (z.B. einer durch einen Umgebungssensor erfassten Sensorinformation oder einer durch einen Fahrzeugsensor erfassten Sensorinformation) soll beispielsweise eine quantitative oder qualitative Repräsentation einer durch den Sensor erfassten chemischen oder physikalischen Eigenschaft (z.B. in Form eines durch einen Sensor erfassten Messwerts einer chemischen oder physikalischen Eigenschaft) und/oder einer durch den Sensor erfassten Umgebungsbeschaffenheit (z.B. in Form eines durch einen optischen Sensor wie einer Kamera erfassten Bilds) verstanden werden.

Dementsprechend soll unter einem durch eine Sensorinformation repräsentierten Parameter (z.B. dem zumindest einen Objektparameter oder einem Fahrzeugparameter) beispielsweise eine qualitative oder quantitative Repräsentation eines Messwerts einer durch einen Sensor (z.B. einen Umgebungssensor oder einen Fahrzeugsensor) erfassten physikalischen und/oder chemischen Eigenschaft (z.B. einer Geschwindigkeit oder Beschleunigung) verstanden werden. Eine quantitative Repräsentation eines Messwerts einer physikalischen und/oder chemischen Eigenschaft kann beispielsweise den durch den Sensor erfassten Messwert der physikalischen und/oder chemischen Eigenschaft angeben; und eine qualitative Repräsentation einer physikalischen und/oder chemischen Eigenschaft kann beispielsweise eine Angabe repräsentieren, ob der durch den Sensor erfasste und/oder bestimmte Messwert der physikalischen und/oder chemischen Eigenschaft ober- oder unterhalb eines vorgegebenen Schwellenwerts oder in einem vorgegebenen Messwertebereich liegt. Ferner soll unter einem durch eine Sensorinformation repräsentierten Parameter (z.B. dem zumindest einen Objektparameter oder einem Fahrzeugparameter) auch ein basierend auf der Sensorinformation bestimmbarer Parameter verstanden werden. Zu diesem Zweck kann vorgesehen sein, die Sensorinformation weiterzuverarbeiten, um den durch die Sensorinformation repräsentierten Parameter zu erhalten. Zum Beispiel kann vorgesehen sein, dass auf eine Sensorinformation, die ein durch einen optischen Sensor wie eine Kamera erfasstes Bild repräsentiert, ein Objekterkennungs- und Objektklassifizierungsalgorithmus angewendet wird, um ein in dem Bild enthaltenes Objekt zu erkennen und/oder zu klassifizieren, so dass als Objektparameter beispielsweise die Objektklasse des erkannten Objekts bestimmt wird.

Es versteht sich, dass eine Sensorinformation mehrere Parameter (z.B. mehrere Objektparameter oder Fahrzeugparameter) repräsentieren kann. Es ist demnach beispielsweise denkbar, dass eine Sensorinformation den zeitlichen Verlauf eines Parameters repräsentiert. Alternativ oder zusätzlich kann eine Sensorinformation mehrere verschiedene Parameter repräsentieren. Es soll beispielsweise ebenfalls als offenbart verstanden werden, dass eine einzelne Sensorinformation eine Mindestanzahl an Parametern repräsentiert (z.B. mindestens einen Parameter, mindestens zwei Parameter, usw.).

Dass die durch den Umgebungssensor des unbemannten Fahrzeugs erfasste Sensorinformation einen Objektparameter eines Objekts repräsentiert, kann dementsprechend so verstanden werden, dass diese Sensorinformation eine qualitative oder quantitative Repräsentation zumindest eines Messwerts zumindest einer durch den Umgebungssensor erfassten chemischen oder physikalischen Eigenschaft des Objekts repräsentiert oder der Objektparameter des Objekts basierend auf dieser Sensorinformation bestimmbar ist. Ein Beispiel für den Objektparameter des Objekts ist eine Geschwindigkeit, eine Beschleunigung, eine Objektklasse oder eine Entfernung des Objekts.

Das Objekt ist beispielsweise ein Verkehrsteilnehmer (z.B. eine Person und/oder ein Fahrzeug) oder ein Gegenstand in einer Umgebung (z.B. einer durch den Sensor des unbemannten Fahrzeugs erfassbaren Umgebung) des unbemannten Fahrzeugs. Dass sich das Objekt in Bezug auf das unbemannte Fahrzeug bewegt, soll beispielsweise derart verstanden werden, dass sich das unbemannte Fahrzeug und das Objekt annähern oder voneinander entfernen. Dabei kann sich das Objekt bewegen oder in Ruhe befinden.

Das Bestimmen, ob eine Kollision zwischen dem unbemannten Fahrzeug und dem Objekt droht, erfolgt beispielsweise gemäß einer oder mehreren (z.B. vorgegebenen) Regeln wie einem Algorithmus oder einem Entscheidungsmodell. Dass das Bestimmen, ob eine Kollision zwischen dem unbemannten Fahrzeug und dem Objekt droht, zumindest teilweise auf dem zumindest einen Objektparameter basiert, soll beispielsweise so verstanden werden, dass der zumindest eine Objektparameter bei dem Bestimmen, ob eine Kollision zwischen dem unbemannten Fahrzeug und dem Objekt droht, berücksichtigt wird. Es versteht sich, dass neben dem zumindest einen Objektparameter ein oder mehrere weitere (z.B. durch die Sensorinformation repräsentierte) Objektparameter oder andere Parameter (z.B. Fahrzeugparameter des unbemannten Fahrzeugs) berücksichtigt werden können.

Zum Beispiel können die Regeln vorgeben, für welche Objektparameter (z.B. für welche qualitative oder quantitative Repräsentation zumindest eines Messwerts zumindest eines durch den Umgebungssensor erfassten chemischen oder physikalischen Eigenschaft des Objekts) oder für welche Kombination von Objektparameter bestimmt werden soll, dass eine Kollision zwischen dem unbemannten Fahrzeug und dem Objekt droht. In einem einfachen Beispiel können die Regeln beispielsweise vorgeben, dass, wenn ein durch die Sensorinformation repräsentierter Objektparameter angibt, dass sich das Objekt dem unbemannten Fahrzeug mit einer Geschwindigkeit größer oder gleich einem vorgegebenen Schwellwert (z.B. 3 m/s) nähert und die Entfernung des Objekt zu dem unbemannten Fahrzeug kleiner oder gleich einem vorgegebenen Schwellwert (z.B. 0,3 m) ist, eine Kollision zwischen dem unbemannten Fahrzeug und dem Objekt droht.

Es versteht sich, dass es nicht zwingend zu einer Kollision kommen muss, wenn bestimmt wird, dass eine Kollision droht. Dabei soll unter einer Kollision zwischen dem unbemannten Fahrzeug und dem Objekt beispielsweise ein Zusammenstoß des unbemannten Fahrzeugs und des Objekts verstanden werden. Bei diesem Zusammenstoß kommt es zu einem physischen Kontakt zwischen dem unbemannten Fahrzeug und dem Objekt, welcher einen Schaden, also einen Kollisionsschaden am unbemannten Fahrzeug und/oder am Objekt zur Folge haben kann. Handelt es sich bei dem mit dem unbemannten Fahrzeug kollidierten Objekt beispielsweise um eine Person (z.B. ein Fußgänger oder ein Fahrradfahrer), so kann die Kollision Verletzungen der Person zur Folge haben.

Wenn bestimmt wird, dass eine Kollision zwischen dem unbemannten Fahrzeug und dem Objekt droht, erfolgt das Bestimmen des zumindest einen Auslöseparameters für das Auslösen des zumindest einen Aufprallkissens des unbemannten Fahrzeugs und das Auslösen und/oder Bewirken des Auslösens des zumindest einen Aufprallkissens. Es kann beispielsweise vorgesehen sein, dass diese Schritte (d.h. das Bestimmen des Auslöseparameters und das Auslösen und/oder Bewirken des Auslösens des zumindest einen Aufprallkissens) nur dann durchgeführt werden, wenn bestimmt wird, dass eine Kollision zwischen dem unbemannten Fahrzeug und dem Objekt droht.

Der zumindest eine Auslöseparameter für das Auslösen des zumindest einen Aufprallkissens ist beispielsweise eingerichtet, das Auslösen des zumindest einen Aufprallkissens zumindest teilweise zu steuern. Zu diesem Zweck legt der zumindest eine Auslöseparameter beispielsweise das zumindest eine Aufprallkissen, eine Auslöseintensität, ein Auslösevolumen und/oder einen Auslösezeitpunkt für das Auslösen des zumindest einen Aufprallkissens fest. Wie unten ausführlich offenbart, kann das zumindest eine Aufprallkissen Teil einer Mehrzahl von Aufprallkissen sein. In diesem Fall kann der zumindest eine Auslöseparameter beispielsweise festlegen, welches/welche Auslösekissen der Mehrzahl von Auslösekissen ausgelöst werden sollen. Ferner, wenn mehr als ein Aufprallkissen der Mehrzahl von Aufprallkissen ausgelöst werden sollen, können diese mehreren Aufprallkissen zumindest teilweise gemäß unterschiedlichen Auslöseparametern ausgelöst werden.

Das Bestimmen des zumindest einen Auslöseparameters für das Auslösen des zumindest einen Aufprallkissens des unbemannten Fahrzeugs erfolgt beispielsweise gemäß einer oder mehreren (z.B. vorgegebenen) Regeln wie einem Algorithmus oder einem Entscheidungsmodell. Dass das Bestimmen zumindest eines Auslöseparameters für das Auslösen des zumindest einen Aufprallkissens zumindest teilweise auf dem zumindest einen Objektparameter basiert, soll beispielsweise derart verstanden werden, dass die Objektinformation bei dem Bestimmen zumindest eines Auslöseparameters für das Auslösen des zumindest einen Aufprallkissens berücksichtigt wird. Es versteht sich, dass neben dem zumindest einen Objektparameter ein oder mehrere weitere (z.B. durch die Sensorinformation repräsentierte) Objektparameter oder andere Parameter (z.B. Fahrzeugparameter des unbemannten Fahrzeugs) berücksichtigt werden können. Ferner können neben dem zumindest einen Auslöseparameter ein oder mehrere weitere Auslöseparameter für das Auslösen des zumindest einen Aufprallkissens des unbemannten Fahrzeugs bestimmt werden.

Zum Beispiel können die Regeln vorgeben, für welche Objektparameter (z.B. für welche qualitative oder quantitative Repräsentation zumindest eines Messwerts zumindest eines durch den Umgebungssensor erfassten chemischen oder physikalischen Eigenschaft des Objekts) oder für welche Kombination von Objektparameter welche(r) Auslöseparameter bestimmt werden soll(en). In einem einfachen Beispiel können die Regeln beispielsweise vorgeben, dass das zumindest eine Aufprallkissen mit einer ersten Auslöseintensität (z.B. ein Gasdruck, mit dem der Gassack einer Airbagvorrichtung durch den Gasgenerator beim Auslösen mit Gas gefüllt wird) ausgelöst werden soll, wenn der zumindest eine durch die Sensorinformation repräsentierte Objektparameter angibt, dass sich das Objekt dem unbemannten Fahrzeug mit einer Geschwindigkeit kleiner als ein vorgegebenen Schwellwerts (z.B. 5 m/s) nähert, und dass das zumindest eine Aufprallkissen mit einer zweiten Auslöseintensität ausgelöst werden soll, wenn der zumindest eine durch die Sensorinformation repräsentierte Objektparameter angibt, dass sich das Objekt dem unbemannten Fahrzeug mit einer Geschwindigkeit größer oder gleich dem vorgegebenen Schwellwert (z.B. 5 m/s) nähert. Dabei ist die erste Auslöseintensität beispielsweise geringer als die zweite Auslöseintensität.

Dass das Auslösen des zumindest einen Aufprallkissens gemäß dem zumindest einen Auslöseparameter erfolgt, soll beispielsweise so verstanden werden, dass der zumindest eine Auslöseparameter bei dem Auslösen des zumindest einen Aufprallkissens berücksichtigt wird, beispielsweise indem das Auslösen des zumindest einen Aufprallkissens derart gesteuert wird, dass der zumindest eine Auslöseparameter befolgt wird.

Unter dem Bewirken des Auslösens des zumindest einen Aufprallkissens soll beispielsweise verstanden werden, dass die offenbarte Vorrichtung das unbemannte Fahrzeug (z.B. eine Steuervorrichtung des unbemannten Fahrzeugs) und/oder das zumindest eine Aufprallkissen des unbemannten Fahrzeugs derart (z.B. mittels einer Steuerinformation) ansteuert, dass das zumindest eine Aufprallkissen ausgelöst wird. Darunter kann beispielsweise verstanden werden, dass das Aufprallkissen durch einen geeigneten Auslösemechanismus (z.B. eine Anzündeeinheit) ausgelöst wird.

Das Auslösen des zumindest einen Aufprallkissens des unbemannten Fahrzeugs soll derart erfolgen, dass das zumindest eine Aufprallkissen vor der drohenden Kollision ausgelöst wird. Dazu ist es beispielsweise denkbar, dass das zumindest eine Aufprallkissen (1) unmittelbar (z.B. schnellstmöglich) nachdem bestimmt wird, dass eine Kollision droht, oder (2) zu einem bestimmten (z.B. durch einen weiteren Auslöseparameter festgelegten) Auslösezeitpunkt ausgelöst wird.

Das Auslösen des zumindest einen Aufprallkissens vor der drohenden Kollision gemäß dem zumindest einen Auslöseparameter ist besonders vorteilhaft, da ein Schaden als Folge einer drohenden Kollision, für die bezüglich eines unbemannten Fahrzeugs beispielweise aufgrund dessen geringer Größe im Vergleich zu übrigen Straßenverkehrsteilnehmern ein erhöhtes Risiko besteht, besonders effektiv verhindert oder vermindert werden kann. Das Auslösen des zumindest einen Aufprallkissens kann insbesondere vorteilhaft sein, weil das zumindest eine Aufprallkissen gemäß dem zumindest einen bestimmten Auslöseparameter zeitlich vor der drohenden Kollision zwischen dem unbemannten Fahrzeug und einem Objekt (z.B. zeitlich vor dem physischen Kontakt zwischen dem unbemannten Fahrzeug und dem Objekt, wenn die drohende Kollision tatsächlich eintritt) ausgelöst wird.

Im Gegensatz zu dem Auslösen zumindest eines Aufprallkissens können gemäß herkömmlichen Auslöseverfahren, wonach Aufprallkissen erst nach einer bereits tatsächlich eingetretenen Kollision zwischen dem unbemannten Fahrzeug und einem Objekt ausgelöst werden, die Kollisionsbeteiligten lediglich nach diesem Zeitpunkt des Auslösens und somit lediglich nach einer bereits tatsächlich eingetretenen Kollision vor noch folgenden Kollisionsschäden geschützt werden. Hinsichtlich dieses Auslösens erst nach einer bereits tatsächlich eingetretenen Kollision ist es außerdem denkbar, dass Aufprallkissen gemäß herkömmlichen Auslöseverfahren nicht mehr gemäß einem erforderlichen Auslöseparameter (z.B. gemäß einer erforderlichen Auslöseintensität bspw. in Form einer erforderlichen Geschwindigkeit, mit der sich das Aufprallkissen öffnet) ausgelöst werden können, um vor noch folgenden Kollisionsschäden zu schützen. Vor diesem Hintergrund kann das Auslösen zumindest eines Aufprallkissens zeitlich vor der drohenden Kollision insbesondere deshalb vorteilhaft sein, da beispielsweise eine im Vergleich zu herkömmlichen Auslöseverfahren niedrigere Auslöseintensität (z.B. eine niedrigere Geschwindigkeit, mit der sich das Aufprallkissen öffnet) bereits ausreichen kann, um vor Kollisionsschäden zu schützen.

Es versteht sich, dass trotz des Bestimmens zumindest eines Auslöseparameters und des Auslösens des zumindest einen Aufprallkissens gemäß dem zumindest einen Auslöseparameters ein Kollisionsschaden aufgrund der drohenden Kollision zwischen dem unbemannten Fahrzeug und einem Objekt möglichweise nicht verringert oder verhindert wird. Dies kann zum Beispiel aufgrund von Unwägbarkeiten (z.B. Fehlern oder Vereinfachungen beim Bestimmen des zumindest einen Auslöseparameters) der Fall sein.

In einer beispielhaften Ausführungsform der Erfindung umfasst das Bestimmen, ob eine Kollision zwischen dem unbemannten Fahrzeug und dem Objekt droht:
- Bestimmen, zumindest teilweise basierend auf dem zumindest einen Objektparameter, einer Wahrscheinlichkeit für das Eintreten der drohenden Kollision.

Dass das Bestimmen einer Wahrscheinlichkeit für das Eintreten der drohenden Kollision zumindest teilweise auf dem zumindest einen Objektparameterbasiert, soll beispielsweise so verstanden werden, dass der zumindest eine Objektparameter beim Bestimmen einer Wahrscheinlichkeit für das Eintreten der drohenden Kollision berücksichtigt wird.

Es ist beispielsweise denkbar, dass für das Bestimmen einer Wahrscheinlichkeit für das Eintreten der drohenden Kollision eine Geschwindigkeit des Objekts und/oder eine Entfernung des Objekts zu dem unbemannten Fahrzeug berücksichtigt wird. Gemäß diesem Beispiel kann beispielsweise eine umso höhere Wahrscheinlichkeit für ein Eintreten der drohenden Kollision bestimmt werden, je schneller sich das Objekt bewegt und/oder je geringer der Abstand des Objekts zum unbemannten Fahrzeug ist. Es versteht sich, dass neben dem zumindest einen Objektparameter ein oder mehrere weitere (z.B. durch die Sensorinformation repräsentierte) Objektparameter oder andere Parameter (z.B. Fahrzeugparameter des unbemannten Fahrzeugs) berücksichtigt werden können.

Ob eine Kollision zwischen dem unbemannten Fahrzeug und dem Objekt droht, kann dementsprechend beispielsweise ein Prüfen umfassen, ob die für das Eintreten der drohenden Kollision bestimmte Wahrscheinlichkeit einen vorgegebenen Schwellenwert (z.B. 50 %, 75 % oder 90 %) überschreitet. Der Schwellenwert kann beispielsweise durch systematische Experimente ermittelt worden sein und/oder auf maschinellem Lernen basieren.

In einer beispielhaften Ausführungsform der Erfindung erfolgt das Bestimmen, ob eine Kollision zwischen dem unbemannten Fahrzeug und dem Objekt droht, zumindest teilweise basierend auf einem durch maschinelles Lernen erhaltenen Entscheidungsmodell.

Das Entscheidungsmodell erhält den zumindest einen Objektparameter beispielsweise als Eingangsparameter und gibt eine Wahrscheinlichkeit dafür, dass eine Kollision mit dem Objekt droht, als Ausgangsparameter aus. Beispiele für ein solches Entscheidungsmodell ist ein künstliches neuronales Netzwerk oder eine KI (künstliche Intelligenz) basierte Entscheidungsmatrix.

Das Entscheidungsmodell wird beispielsweise als Ergebnis einer Lernphase gemäß einem Algorithmus zum maschinellen Lernen (z.B. ein Algorithmus gemäß der Deep Learning Methode) erhalten. In der Lernphase wird das Entscheidungsmodell anhand von Objektparametern als Eingangsparameter trainiert. Dabei können die Objektparameter beispielsweise im Rahmen von systematischen Experimenten erhalten werden.

In einer beispielhaften Ausführungsform der Erfindung umfasst das unbemannte Fahrzeug eine Mehrzahl an Aufprallkissen.

Ein oder mehrere (z.B. jedes) der Aufprallkissen der Mehrzahl an Aufprallkissen kann beispielsweise an einer anderen Stellen einer Außenseite des unbemannten Fahrzeugs angeordnet sein und/oder sich zumindest teilweise in eine andere Richtung öffnen und/oder entfalten, wenn das jeweilige Aufprallkissen ausgelöst wird. Die Mehrzahl der Aufprallkissen können zumindest teilweise in Form einer Matrix an einer Außenseite des unbemannten Fahrzeugs angeordnet sein. Ferner können sich die Mehrzahl der Aufprallkissen zumindest teilweise (z.B. in Form und/oder Größe) unterscheiden.

Zum Beispiel können sich ein oder mehrere der Aufprallkissen der Mehrzahl an Aufprallkissen an einer in Fahrtrichtung des unbemannten Fahrzeugs gesehen vorderen, hinteren, rechten und/oder linken Außenseite des unbemannten Fahrzeugs angeordnet sein und sich zumindest im Wesentlichen von der jeweiligen Außenseite weg öffnen oder entfalten, so dass sich die an der vorderen Außenseite des unbemannten Fahrzeugs angeordneten Aufprallkissen der Mehrzahl an Aufprallkissen zumindest im Wesentlichen in Fahrtrichtung öffnen und/oder entfalten, wenn sie ausgelöst werden.

Zum Beispiel umfasst das Verfahren ferner:
- Bestimmen, zumindest teilweise basierend auf dem zumindest einen Objektparameter, welches zumindest eine Aufprallkissen der Mehrzahl an Aufprallkissen ausgelöst werden soll.

Es ist zum Beispiel denkbar, dass das Bestimmen, ob eine Kollision zwischen dem unbemannten Fahrzeug und dem Objekt droht, weiterhin ein Bestimmen umfasst, von welcher Richtung und/oder an welcher Außenseite (z.B. an der in Fahrtrichtung des unbemannten Fahrzeugs gesehenen vorderen, hinteren, linken, rechten Außenseite) des unbemannten Fahrzeugs eine Kollision mit dem Objekt droht, beispielsweise zumindest teilweise basierend auf dem zumindest einen Objektparameter (z.B. eine Bewegungsrichtung) des Objekts. Wenn dementsprechend beispielsweise bestimmt wird, dass eine Kollision zwischen dem unbemannten Fahrzeug und dem Objekt droht und dass diese Kollision an einer bestimmten Außenseite des unbemannten Fahrzeugs droht, kann beispielsweise bestimmt werden, dass zumindest ein Aufprallkissen der Mehrzahl an Aufprallkissen ausgelöst wird, welches an der bestimmten Außenseite des unbemannten Fahrzeugs angeordnet ist, an welcher die Kollision droht. Dieses Vorgehen ist beispielsweise vorteilhaft, um einen Kollisionsschaden aufgrund einer drohenden Kollision gezielt zu verringern und/oder zu verhindern und um die Mehrzahl an Aufprallkissen besonders effizient einzusetzen (indem z.B. ein unnötiges Auslösen eines Aufprallkissens der Mehrzahl an Aufprallkissen vermieden wird).

Es soll darüber hinaus als offenbart verstanden werden, dass das Bestimmen, welches zumindest eine Aufprallkissen der Mehrzahl an Aufprallkissen ausgelöst wird, neben dem zumindest einen Objektparameter auf einem oder mehreren weiteren (z.B. durch die Sensorinformation repräsentierten) Objektparametern oder anderen Parametern (z.B. Fahrzeugparameter des unbemannten Fahrzeugs) basieren kann.

Darüber ist weiterhin als offenbart zu verstehen, dass hinsichtlich der Mehrzahl an Aufprallkissen, welche das unbemannte Fahrzeug umfasst, beispielsweise bestimmt werden kann, dass mehr als ein Aufprallkissen (z.B. 2, 3 oder mehr Aufprallkissen) der Mehrzahl an Aufprallkissen ausgelöst werden sollen. Dabei kann zum Beispiel bestimmt werden, dass diese mehreren Aufprallkissen zumindest teilweise gemäß unterschiedlichen Auslöseparametern ausgelöst werden. So kann beispielsweise erreicht werden, dass die mehreren Aufprallkissen zum Beispiel zeitgleich oder zeitversetzt zueinander ausgelöst oder zum Beispiel mit gleicher oder unterschiedlicher Auslöseintensität ausgelöst werden.

Als Ergebnis des Bestimmens wird beispielsweise ein Auslöseparameter erhalten, der festlegt, welches zumindest eine Aufprallkissen der Mehrzahl an Aufprallkissen ausgelöst werden soll. Zu diesem Zweck kann der Auslöseparameter das zumindest eine Aufprallkissen der Mehrzahl an Aufprallkissen beispielsweise repräsentieren (z.B. identifizieren). Es versteht sich, dass der Auslöseparameter ferner beispielsweise eine Auslöseintensität, ein Auslösevolumen und/oder einen Auslösezeitpunkt für das Auslösen des zumindest einen Aufprallkissens festlegen kann.

In einer beispielhaften Ausführungsform der Erfindung legt der zumindest eine Auslöseparameter das zumindest eine Aufprallkissen, eine Auslöseintensität, ein Auslösevolumen und/oder einen Auslösezeitpunkt für das Auslösen des zumindest einen Aufprallkissens fest.

Eine Auslöseintensität eines Aufprallkissens ist beispielsweise charakteristisch für den Zeitraum, in dem sich das Aufprallkissen, wenn es ausgelöst wird, öffnet und/oder entfaltet, die Geschwindigkeit, mit der sich das Aufprallkissen, wenn es ausgelöst wird, öffnet und/oder entfaltet, und/oder den Druck, mit dem sich das Aufprallkissen, wenn es ausgelöst wird, öffnet und/oder entfaltet.

Unter einem Auslösevolumen eines Aufprallkissens soll beispielsweise das (z.B. maximale) Volumen des geöffneten und/oder entfalteten Aufprallkissens nach dem Auslösen verstanden werden.

Der Auslösezeitpunkt eines Aufprallkissens beschreibt beispielsweise den Zeitpunkt, zu dem das Aufprallkissen ausgelöst werden soll (z.B. den Zeitpunkt, zu dem das Öffnen und/oder Entfalten des Aufprallkissens beginnen soll).

Wie oben offenbart, ist ein Beispiel für ein Aufprallkissen eine Airbagvorrichtung umfassend einen Gassack (z.B. einem Kunststoffsack, insbesondere einem Nylonsack) und einen Gasgenerator, wobei die Airbagvorrichtung eingerichtet ist, wenn sie ausgelöst wird, den Gassack mit von dem Gasgenerator erzeugten Gas zu befüllen. Dabei umfasst der Gasgenerator beispielsweise eine Anzündeeinheit und eine oder mehrere Treibladungen (z.B. ein Festtreibstoff, welcher in Tablettenform vorliegt). Zum Beispiel entzündet die Anzündeeinheit beim Auslösen des Airbags (z.B. über einen Strompuls) eine oder mehrere der Treibladungen, sodass es zu einer Gasentwicklung kommt, welche zu der Befüllung des Gassacks mit Gas führt. Durch das Vorsehen mehrerer Treibladungen in dem Gasgenerator kann eine Airbagvorrichtung mit verschiedenen Auslöseintensitäten und Auslösevolumen ausgelöst werden. Dabei entspricht die geringste Auslöseintensität und/oder das geringste Auslösevolumen beispielsweise dem Fall, dass lediglich eine Treibladung gezündet wird, und die größte Auslöseintensität und/oder das größte Auslösevolumen entspricht beispielsweise dem Fall, dass alle Treibladungen gezündet werden. Dementsprechend kann ein Auslöseparameter die Auslöseintensität und/oder das Auslösevolumen einer Airbagvorrichtung festlegen, in dem er die Anzahl von Treibladungen, die durch die Anzündeinheit gezündet werden sollen, vorgibt. Ferner kann ein Auslöseparameter den Auslösezeitpunkt einer Airbagvorrichtung festlegen, in dem er den Zeitpunkt, zu dem die Anzündeeinheit die Treibladung(en) zünden soll, vorgibt.

In einer beispielhaften Ausführungsform der Erfindung repräsentiert der zumindest eine Objektparameter des Objekts zumindest eines der Folgenden:
- eine Position des Objekts,
- eine Entfernung des Objekts zu dem unbemannten Fahrzeug,
- eine Objektklasse des Objekts,
- eine Bewegungsrichtung des Objekts,
- eine Geschwindigkeit des Objekts, und/oder
- eine Beschleunigung des Objekts.

Eine Position eines Objekts (z.B. des Objekts) ist beispielsweise eine absolute Position oder eine relative Position (z.B. im Bezug zu dem unbemannten Fahrzeug). Eine solche Position kann beispielsweise in Form einer Positionsangabe, die sich beispielsweise auf ein beliebig festgelegtes absolutes oder relatives Koordinatensystem bezieht, repräsentiert werden. Eine Position eines Objekts im Bezug zu dem unbemannten Fahrzeug kann beispielsweise basierend auf einer Abfolge mehrerer durch einen optischen Sensor (z.B. einer Kamera) des unbemannten Fahrzeugs erfasster Bilder bestimmt werden.

Eine Entfernung eines Objekts (z.B. des Objekts) zu dem unbemannten Fahrzeug ist beispielsweise eine euklidische oder geodätische Entfernung zwischen dem Objekt und dem unbemannten Fahrzeug. Eine solche Entfernung zwischen einem solchen Objekt und dem unbemannten Fahrzeug kann beispielsweise durch einen Entfernungssensor (z.B. ein Abstandssensor in Form eines Ultraschall- oder Radarsensors) des unbemannten Fahrzeugs erfasst werden.

Eine Objektklasse eines Objekts (z.B. des Objekts) ist beispielsweise eine Objektklasse einer Mehrzahl an vorgegebenen Objektklassen. Beispiele für solche Objektklassen sind: sich bewegende Objekte und sich nicht bewegende Objekte. Diese beiden beispielhaften Objektklassen können wie folgt noch feiner unterteilt werden: Landfahrzeug wie Fahrrad, Motorrad, Auto, Lastwagen sowie Fußgänger als Objektklassen für "sich bewegende Objekte" und Straßenmöbel (z.B. Sitzbank, Ampel, Litfaßsäule, Straßenschild), Gebäude, Pflanze als Objektklassen für "sich nicht bewegende Objekte". Eine Position eines Objekts im Bezug zu dem unbemannten Fahrzeug kann beispielsweise basierend auf einem durch einen optischen Sensor (z.B. einer Kamera) des unbemannten Fahrzeugs erfassten Bild bestimmt werden (z.B. gemäß einem vorgegebenen Algorithmus wie einem vorgegebenen Segmentierungs-, Bilderkennungs- und/oder Klassifizierungsalgorithmus).

Eine Bewegungsrichtung eines Objekts (z.B. des Objekts) ist zum Beispiel als die Richtung zu verstehen, in die sich das Objekt bewegt. Diese Richtung kann beispielsweise ohne Bezug (z.B. unter Angabe einer Himmelsrichtung) oder mit Bezug zum unbemannten Fahrzeug (z.B. unter Angabe eines Winkels, welchen die Bewegungsrichtung des Objekts mit einer Bewegungsrichtung des unbemannten Fahrzeugs einschließt) repräsentiert werden. Es ist darüber hinaus ebenfalls denkbar, dass die Bewegungsrichtung als Objektparameter eines Objekts auf eine Angabe darüber beschränkt ist, ob sich das Objekt auf das unbemannte Fahrzeug zubewegt oder nicht.

Eine Geschwindigkeit eines Objekts (z.B. des Objekts) kann beispielsweise ohne Bezug (z.B. als absolute Geschwindigkeit) oder mit Bezug zum unbemannten Fahrzeug (z.B. als relative Geschwindigkeit oder Differenzgeschwindigkeit) verstanden werden. Es kann sich weiterhin beispielsweise um eine Durchschnittsgeschwindigkeit oder eine momentane Geschwindigkeit handeln.

Eine Beschleunigung eines Objekts (z.B. des Objekts) kann beispielsweise ohne Bezug (z.B. als absolute Beschleunigung) oder mit Bezug zum unbemannten Fahrzeug (z.B. als relative Beschleunigung oder Differenzbeschleunigung) verstanden werden. Insbesondere soll dabei als offenbart verstanden werden, dass die Beschleunigung eines Objekts eine Änderung der Geschwindigkeit des Objekts angibt und somit eine positive Beschleunigung (Zunahme der Geschwindigkeit des Objekts) oder eine negative Beschleunigung (Abnahme der Geschwindigkeit des Objekts) des Objekts denkbar ist.

Eine Bewegungsrichtung, eine Geschwindigkeit und/oder eine Beschleunigung eines Objekts kann beispielsweise durch einen Radar- oder Lidarsensor des unbemannten Fahrzeugs erfasst werden.

In einer beispielhaften Ausführungsform der Erfindung ist der zumindest eine Umgebungssensor des unbemannten Fahrzeugs einer der folgenden Sensoren: ein Temperatursensor (z.B. ein Thermometer, ein Thermoelement und/oder ein Thermowiderstand), ein elektromagnetischer Sensor (z.B. ein Radarsensor), ein akustischer Sensor (z.B. ein Mikrofon, ein Geräuschsensor und/oder ein Ultraschallsensor) oder ein optischer Sensor (z.B. ein Infrarotsensor, ein Lichtsensor, ein Helligkeitssensor, eine Photodiode, ein Photowiderstand, ein Bildsensor, eine Bildkamera, ein CMOS-Sensor und/oder ein CCD-Sensor, eine Videokamera und/oder ein Lidarsensor).

In einer beispielhaften Ausführungsform der Erfindung umfasst das Verfahren ferner:
- Erhalten und/oder Bewirken des Erhaltens einer Fahrzeuginformation, wobei die Fahrzeuginformation zumindest einen Fahrzeugparameter des unbemannten Fahrzeugs repräsentiert, und wobei das Bestimmen, ob eine Kollision zwischen dem unbemannten Fahrzeug und dem Objekt droht, zumindest teilweise auf dem zumindest einen Fahrzeugparameter basiert und/oder das Bestimmen des zumindest einen Auslöseparameters für das Auslösen des zumindest einen Aufprallkissens des unbemannten Fahrzeugs zumindest teilweise auf dem zumindest einen Fahrzeugparameter basiert.

Dass die durch den Fahrzeugsensor des unbemannten Fahrzeugs erfasste Fahrzeuginformation einen Fahrzeugparameter des unbemannten Fahrzeugs repräsentiert, kann beispielsweise so verstanden werden, dass diese Fahrzeuginformation eine qualitative oder quantitative Repräsentation zumindest eines Messwerts zumindest einer durch den Fahrzeugsensor erfassten chemischen oder physikalischen Eigenschaft des unbemannten Fahrzeugs repräsentiert. Ein Beispiel für den Fahrzeugparameter des unbemannten Fahrzeugs ist eine Geschwindigkeit oder eine Beschleunigung des unbemannten Fahrzeugs.

Dass das Bestimmen, ob eine Kollision zwischen dem unbemannten Fahrzeug und dem Objekt droht, zumindest teilweise auf dem zumindest einen Fahrzeugparameter basiert, soll beispielsweise so verstanden werden, dass der zumindest eine Fahrzeugparameter bei dem Bestimmen, ob eine Kollision zwischen dem unbemannten Fahrzeug und dem Objekt droht, berücksichtigt wird.

Wie oben offenbart, kann das Bestimmen, ob eine Kollision zwischen dem unbemannten Fahrzeug und dem Objekt droht beispielsweise gemäß einer oder mehreren (z.B. vorgegebenen) Regeln wie einem Algorithmus oder einem Entscheidungsmodell erfolgen. Zum Beispiel können die Regeln vorgeben, für welche Kombination von Objektparameter(n) und Fahrzeugparameter(n) bestimmt werden soll, dass eine Kollision zwischen dem unbemannten Fahrzeug und dem Objekt droht. In einem einfachen Beispiel können die Regeln beispielsweise vorgeben, dass, wenn der durch die Sensorinformation repräsentierte Objektparameter angibt, dass die Entfernung des Objekts zu dem unbemannten Fahrzeug kleiner oder gleich einem vorgegebenen Schwellwert (z.B. 0,3 m) ist, und der durch die Fahrzeuginformation repräsentierte Fahrzeugparameter angibt, dass sich das unbemannte Fahrzeug mit einer Geschwindigkeit größer oder gleich einem vorgegebenen Schwellwert (z.B. 5 m/s) in Richtung des Objekts bewegt, bestimmt werden soll, dass eine Kollision zwischen dem unbemannten Fahrzeug und dem Objekt droht.

Wie oben offenbart, kann eine solche Fahrzeuginformation, die zumindest einen erfassten Fahrzeugparameter des unbemannten Fahrzeugs repräsentiert, beispielsweise durch das Erfassen des Fahrzeugparameters durch zumindest einen Fahrzeugsensor des unbemannten Fahrzeugs erhalten werden. Es versteht sich jedoch, dass die vorliegende Erfindung nicht hierauf beschränkt ist. Dementsprechend soll als offenbart verstanden werden, dass der zumindest eine Fahrzeugparameter durch zumindest einen Fahrzeugsensor des unbemannten Fahrzeugs erfasst wird. Dabei ist der zumindest eine Fahrzeugsensor des unbemannten Fahrzeugs beispielsweise Teil der Vorrichtung, die das Verfahren ausführt, oder extern von dieser Vorrichtung (d.h. kein Teil der Vorrichtung, die das Verfahren ausführt).

Bei dem zumindest einen Fahrzeugsensor kann es sich beispielsweise um einen Geschwindigkeitssensor (z.B. ein Tachometer und/oder ein Drehzahlsensor, wobei die erfasste Drehzahl beispielsweise proportional zur Geschwindigkeit ist), einen Beschleunigungssensor (z.B. ein piezoelektrischer Beschleunigungssensor) oder einen Drehratensensor (z.B. ein Gyroskop) handeln. Dabei soll als offenbart verstanden werden, dass es sich in dem Fall mehrerer Fahrzeugsensoren bei den Fahrzeugsensoren um unterschiedliche Sensoren handeln kann.

Zum Beispiel repräsentiert der zumindest eine Fahrzeugparameter zumindest eines der Folgenden:
- eine Bewegungsrichtung des unbemannten Fahrzeugs,
- eine Geschwindigkeit des unbemannten Fahrzeugs, und/oder
- eine Beschleunigung des unbemannten Fahrzeugs.

Eine Bewegungsrichtung des unbemannten Fahrzeugs ist zum Beispiel als die Richtung zu verstehen, in die sich das unbemannte Fahrzeug bewegt. Die Bewegungsrichtung des unbemannten Fahrzeugs kann beispielsweise durch ein Gyroskop erfasst werden.

Eine Geschwindigkeit des unbemannten Fahrzeugs kann beispielsweise als Durchschnittsgeschwindigkeit oder eine momentane Geschwindigkeit des unbemannten Fahrzeugs verstanden werden. Die Geschwindigkeit des unbemannten Fahrzeugs kann beispielsweise durch einen Geschwindigkeitssensor erfasst werden.

Unter einer Beschleunigung des unbemannten Fahrzeugs soll beispielsweise verstanden werden, dass die Beschleunigung des unbemannten Fahrzeugs eine Änderung der Geschwindigkeit des unbemannten Fahrzeugs angibt und somit eine positive Beschleunigung (Zunahme der Geschwindigkeit des unbemannten Fahrzeugs) oder eine negative Beschleunigung (Abnahme der Geschwindigkeit des unbemannten Fahrzeugs) des unbemannten Fahrzeugs denkbar ist. Die Beschleunigung des unbemannten Fahrzeugs kann beispielsweise durch einen Beschleunigungssensor erfasst werden.

In einer beispielhaften Ausführungsform der Erfindung ist das unbemannte Fahrzeug ein zumindest teilautonom fahrendes und/oder automatisch fahrendes Fahrzeug und/oder ferngesteuert fahrendes Fahrzeug.

Ein unbemanntes Fahrzeug soll beispielsweise als zumindest teilweise autonom fahrend verstanden werden, wenn sich das Fahrzeug zumindest auf einem Teil einer vorgegebenen Route selbsttätig (z.B. ohne Einfluss eines Fahrers) fortbewegt und entlang der vorgegebenen Route navigiert. Ein autonom fahrendes Fahrzeug bewegt sich beispielsweise auf der gesamten Route selbsttätig (z.B. ohne Einfluss eines Fahrers) fort und navigiert selbsttätig entlang der gesamten Route.

Ein automatisch fahrendes Fahrzeug ist beispielsweise ein Fahrzeug, das einem vorausfahrenden Fahrzeug oder einer vorausgehenden Person selbsttätig folgt (z.B. in einem sogenannten follow-me Modus).

Ein ferngesteuert fahrendes Fahrzeug wird beispielsweise von einem entfernten Fahrer (d.h. einem Fahrer, der sich nicht in dem Fahrzeug befindet) gesteuert. Dabei können eine Fernsteuerung auf Sicht (d.h. der Fahrer befindet sich noch in Sichtweite des unbemannten Fahrzeugs) und eine Fernsteuerung per Teleoperation (d.h. der Fahrer befindet sich außerhalb der Sichtweite des Fahrzeugs und steuert das Fahrzeug anhand von durch Sensoren des unbemannten Fahrzeugs erfassten Sensorinformationen wie durch eine Kamera des unbemannten Fahrzeugs erfasste Bilder) unterschieden werden.

In einer beispielhaften Ausführungsform der Erfindung umfasst das unbemannte Fahrzeug Mittel zum Aufnehmen und Transportieren eines oder mehrerer Güter. Ein Beispiel für diese Güter sind Schuttgüter oder Stückgüter. Insbesondere kann ein solches Stückgut auch eine Sendung wie ein Packstück, eine Paketsendung (z.B. ein Paket) und/oder eine Briefsendung (z.B. ein Brief) sein. Ein Mittel zum Aufnehmen und Transportieren eines solches Gutes ist beispielsweise ein durch eine Tür und/oder Klappe verschließbares Aufnahmefach zum Aufnehmen und Transportieren des Gutes. Es versteht sich, dass das unbemannte Fahrzeug auch mehrere durch eine Tür und/oder Klappe verschließbare Aufnahmefächer zum Aufnehmen und Transportieren eines Gutes oder mehrerer Güter aufweisen kann. Die jeweilige Tür und/oder Klappe verschließt beispielsweise eine Gehäuse- und/oder Karosserieöffnung des unbemannten Fahrzeugs, durch die das jeweilige Aufnahmefach des Fahrzeugs zugänglich ist.

In einer beispielhaften Ausführungsform der Erfindung ist das unbemannte Fahrzeug nicht zum Transport von Personen vorgesehen. Dies soll beispielsweise derart verstanden werden, dass das unbemannte Fahrzeug nicht zum Transport von Personen (d.h. weder von einem Fahrer noch von Passagieren) eingerichtet ist. Zum Beispiel ist das unbemannte Fahrzeug ausschließlich zum Aufnehmen und Transportieren eines oder mehrerer Güter vorgesehen.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Ins-besondere sollen Merkmale, die in den Figuren enthalten sind, keineswegs als not-wendiger Bestandteil der vorliegenden Erfindung erachtet werden.

Es zeigen:
- Fig. 1: eine schematische Darstellung einer beispielhaften Ausführungsform eines unbemannten Fahrzeugs gemäß der Erfindung;
- Fig. 2: eine schematische Darstellung einer beispielhaften Ausführungsform einer Vorrichtung gemäß der Erfindung;
- Fig. 3: eine schematische Darstellung einer beispielhaften Situation, in der ein Verfahren gemäß der Erfindung ablaufen kann;
- Fig. 4: ein Flussdiagramm eines Ausführungsbeispiels eines Verfahrens gemäß der Erfindung; und
- Fig. 5: beispielhafte Ausführungsformen von Speichermedien.

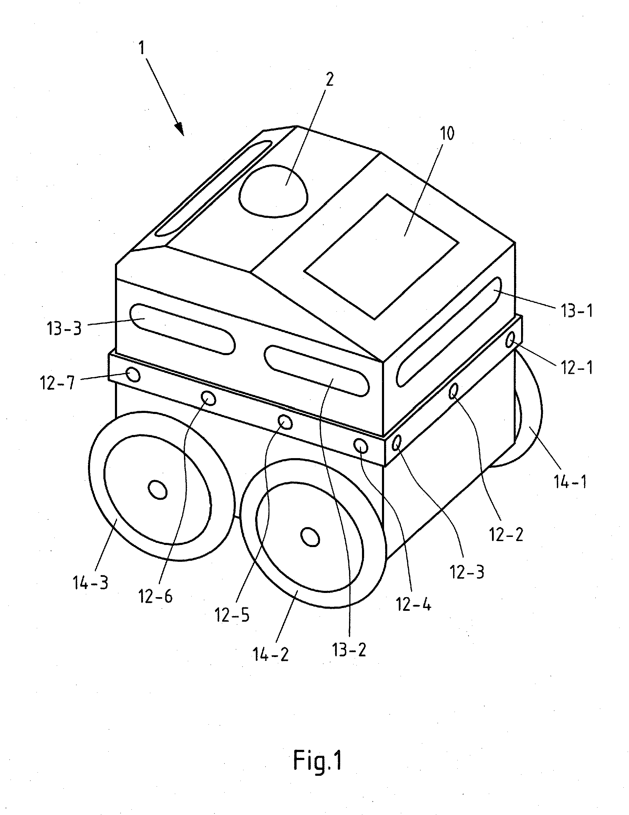

Fig. 1 ist eine schematische Darstellung einer beispielhaften Ausführungsform eines unbemannten Fahrzeugs 1 gemäß der Erfindung.

Das unbemannte Fahrzeug 1 ist ein Landfahrzeug und weist ein mit einer Tür verschlossenes Aufnahmefach 10 auf. In dem Aufnahmefach 10 kann das unbemannte Fahrzeug 1 eine Sendung transportieren. Zum Beispiel handelt es sich bei dem unbemannten Fahrzeug 1 um einen Outdoor-Roboter oder eine Transportdrohne. Beispielsweise ist das unbemannte Fahrzeug eingerichtet, sich zumindest teilweise autonom fortzubewegen.

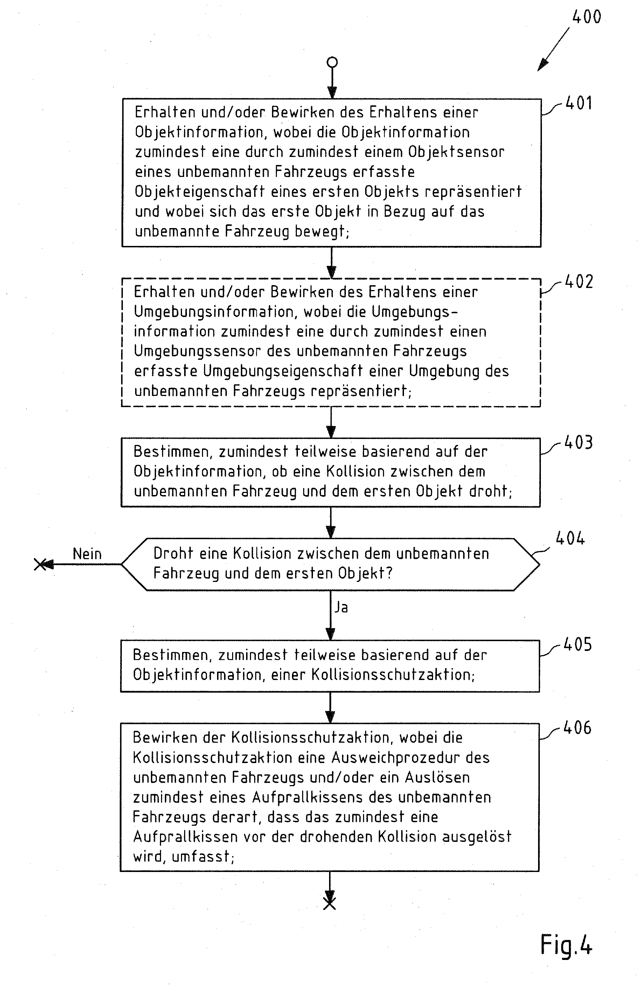

Zum Beispiel weist das unbemannte Fahrzeug 1 eine Vorrichtung 2 auf, welche beispielsweise eingerichtet ist, um ein Verfahren gemäß der Erfindung (z.B. das Verfahren gemäß dem Flussdiagramm in Fig. 4) auszuführen.

Ferner weist das unbemannte Fahrzeug 1 beispielhaft mehrere Umgebungssensoren 12-1 bis 12-7 auf, die an verschiedenen Außenseite des unbemannten Fahrzeugs 1 angeordnet sind. Die Umgebungssensoren 12-1 bis 12-7 sind beispielsweise eingerichtet, eine Umgebung des unbemannten Fahrzeugs 1 zumindest teilweise zu überwachen und eine Sensorinformation zu erfassen, die zumindest einen Objektparameter eines Objekts, das sich in der Umgebung des unbemannten Fahrzeugs befindet, repräsentiert. Es versteht sich, dass das unbemannte Fahrzeug 1 neben den Umgebungssensoren 12-1 bis 12-7 weitere Sensoren (z.B. Umgebungssensoren, die an in Fig. 1 nicht sichtbaren Außenseiten des unbemannten Fahrzeugs 1 angeordnet sein können, und/oder Fahrzeugsensoren) umfassen kann. Auch kann die Vorrichtung 2 ein oder mehrere weitere Sensoren (z.B. Umgebungssensoren und/oder Fahrzeugsensoren) umfassen, die somit sowohl Teil der Vorrichtung 2 als auch des unbemannten Fahrzeugs 1 wären.

Im Folgenden wird beispielhaft angenommen, dass es sich bei den Umgebungssensoren 12-1 bis 12-7 um Ultraschallsensoren handelt, die eingerichtet sind eine Ultraschallsensorinformation (z.B. in Form einer Ultraschallsignallaufzeit) zu erfassen. Zu diesen Zweck sind die Ultraschallsensoren 12-1 bis 12-7 jeweils eingerichtet, einen Ultraschallimpuls auszusenden und eine Reflektion des Ultraschallimpuls zu empfangen sowie eine Ultraschallsignallaufzeit (d.h. den Zeitraum zwischen dem Aussenden des Ultraschallimpuls und dem Empfangen der Reflektion des Ultraschallimpuls) zu messen. Basierend auf einer solchen Ultraschallsignallaufzeit kann die Entfernung zwischen dem unbemannten Fahrzeug 1 und dem Objekt, an dem der Ultraschallimpuls reflektiert wurde, bestimmt werden. Ferner kann basierend auf zwei aufeinanderfolgend ausgesendeten Ultraschallimpulsen und den für die beiden Ultraschallimpulse gemessenen Ultraschallsignallaufzeiten bestimmt werden, ob sich das Objekt, an dem die jeweiligen Ultraschallimpulse reflektiert wurden, dem unbemannten Fahrzeug 1 nähert oder davon entfernt und, wenn die Aussendezeitpunkte der beiden Ultraschallimpulse bekannt sind, mit welcher durchschnittlichen Differenzgeschwindigkeit sich das Objekt dem unbemannten Fahrzeug 1 genähert oder von dem unbemannten Fahrzeug 1 entfernt hat. Es versteht sich, dass das unbemannte Fahrzeug 1 zusätzlich oder alternativ auch andere Sensoren (Temperatursensoren, elektromagnetische Sensoren, akustische Sensoren und/oder optische Sensoren) als Umgebungssensoren 12-1 bis 12-7 umfassen kann.

Das unbemannte Fahrzeug 1 umfasst mehrere Aufprallkissen 13-1, 13-2 und 13-3 (d.h. eine Mehrzahl an Aufprallkissen 13-1 bis 13-3), die an verschiedenen Außenseiten des unbemannten Fahrzeugs 1 angeordnet sind. Es versteht sich, dass das unbemannte Fahrzeug 1 weitere Aufprallkissen umfassen kann (z.B. Aufprallkissen, die an in Fig. 1 nicht sichtbaren Außenseiten des unbemannten Fahrzeugs 1 angeordnet sein können).

Im Folgenden wird beispielhaft angenommen, dass es sich bei den Aufprallkissen 13-1 bis 13-3 um Airbagvorrichtungen handelt. Wie oben offenbart, umfasst jede der Airbagvorrichtungen 13-1 bis 13-3 beispielsweise einen jeweiligen Gassack und einen jeweiligen Gasgenerator, wobei die Airbagvorrichtung eingerichtet ist, wenn sie ausgelöst wird, den Gassack mit von dem Gasgenerator erzeugten Gas zu befüllen, so dass sich der Gassack öffnet oder entfaltet. Der Gassack ist beispielsweise ein Kunststoffsack (z.B. ein Nylonsack). Der Gasgenerator ist beispielsweise ein pyrotechnischer Gasgenerator, ein Kaltgasgenerator oder ein Hybridgasgenerator. Zum Beispiel umfasst der jeweilige Gasgenerator jeder der Airbagvorrichtungen 13-1 bis 13-3 zwei Treibladungen. Dadurch kann jede der Airbagvorrichtungen 13-1 bis 13-3 mit zwei verschiedenen Auslöseintensitäten ausgelöst werden. Dabei entspricht die geringere Auslöseintensität beispielsweise dem Fall, dass lediglich eine Treibladung der jeweiligen Airbagvorrichtung gezündet wird, und die höhere Auslöseintensität entspricht beispielsweise dem Fall, dass beide Treibladungen der jeweiligen Airbagvorrichtung gezündet werden.

Im vorliegenden Beispiel nach Fig. 1 sind die Ultraschallsensoren 12-1 bis 12-7 und die Airbagvorrichtungen 13-1 bis 13-3 des unbemannten Fahrzeugs mit der Vorrichtung 2 über ein oder mehrere drahtgebundene Kommunikationsverbindungen (z.B. über einen oder mehrere Bussysteme wie ein oder mehrere serielle und/oder parallele Busverbindungen des unbemannten Fahrzeugs 1) kommunikativ verbunden. Dazu weisen die Ultraschallsensoren 12-1 bis 12-7 und die Airbagvorrichtungen 13-1 bis 13-3 eine oder mehrere entsprechende drahtgebundene Kommunikationsschnittstellen auf. Alternativ oder zusätzlich können Ultraschallsensoren 12-1 bis 12-7 und die Airbagvorrichtungen 13-1 bis 13-3 auch über eine drahtlose Kommunikationsverbindung mit der Vorrichtung 2 kommunikativ verbunden sein. Zu diesem Zweck können die Ultraschallsensoren 12-1 bis 12-7 und die Airbagvorrichtungen 13-1 bis 13-3 ein oder mehrere drahtlose Kommunikationsschnittstellen umfassen.

Unter einer drahtgebundenen Kommunikationsverbindung soll vorzugsweise eine Kommunikationsverbindung über ein drahtgebundenes Kommunikationsnetzwerk wie ein Ethernet-Kommunikationsnetzwerk, ein CAN-Bussystem (Controller Area Network), ein K-Leitungs-Bussystem oder ein FlexRay-Bussystem verstanden werden. Ethernet ist zum Beispiel in den Standards der IEEE-802.3-Familie spezifiziert. CAN ist in den Standards der ISO 11898-Familie, K-Leitung ist in den Standards ISO 9141 und ISO 14230-1 und FlexRay in den Standards der ISO 17458-Familie spezifiziert.

Ein Beispiel für eine drahtlose Kommunikationsverbindung ist eine Kommunikationsverbindung gemäß einer drahtlosen Kommunikationstechnik wie Radio Frequency Identification (RFID) und/oder Near Field Communication (NFC) und/oder Bluetooth (z.B. Bluetooth Version 2.1 und/oder 4.0) und/oder Wireless Local Area Network (WLAN). RFID und NFC- sind beispielsweise gemäß den ISO-Standards 18000, 11784/11785 und dem ISO/IEC-Standard 14443-A und 15693 spezifiziert. Die Bluetooth-Spezifikationen sind derzeit im Internet unter www.bluetooth.org erhältlich. WLAN ist zum Beispiel in den Standards der IEEE-802.11-Familie spezifiziert.

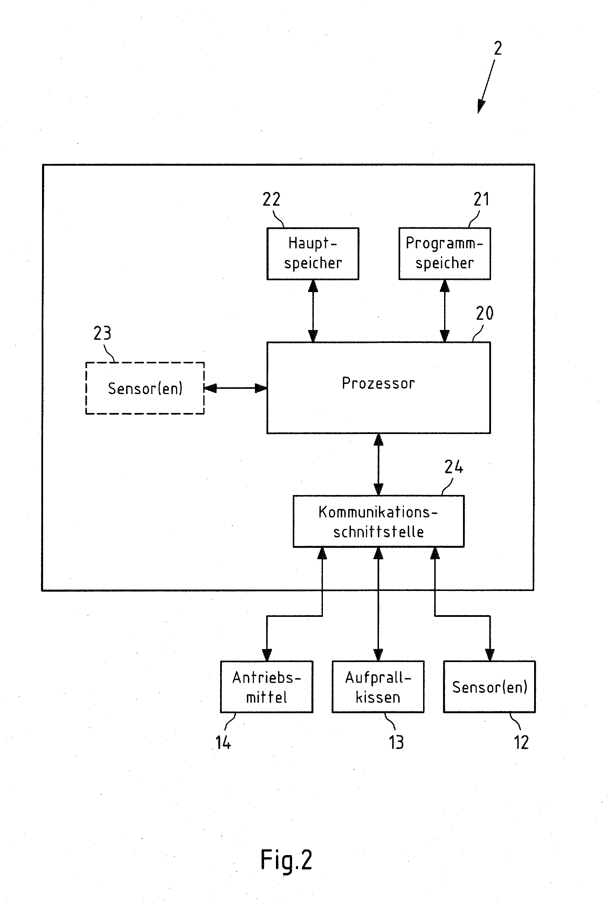

Fig. 2 ist eine schematische Darstellung einer beispielhaften Ausführungsform einer Vorrichtung 2 (z.B. der in Fig. 1 dargestellten Vorrichtung 2) gemäß der Erfindung.

Die Vorrichtung 2 umfasst beispielhaft einen Prozessor 20 und verbunden mit dem Prozessor 20 einen ersten Speicher als Programmspeicher 21, einen zweiten Speicher als Hauptspeicher 22 und eine drahtgebundene Kommunikationsschnittstelle 24. Ferner kann die Vorrichtung 2 optional einen oder mehrere Sensoren 23 (z.B. einen Umgebungssensor) umfassen.

Unter einem Prozessor wie dem Prozessor 20 soll beispielsweise ein Mikroprozessor, eine Mikrokontrolleinheit, ein Mikrocontroller, ein digitaler Signalprozessor (DSP), eine Anwendungsspezifische Integrierte Schaltung (ASIC) oder ein Field Programmable Gate Array (FPGA) verstanden werden. Es versteht sich, dass die Vorrichtung 2 auch mehrere Prozessoren 20 umfassen kann.

Prozessor 20 führt Programmanweisungen aus, die in Programmspeicher 21 gespeichert sind, und speichert beispielsweise Zwischenergebnisse oder ähnliches in Hauptspeicher 22. Der Programmspeicher 21 enthält beispielsweise Programmanweisungen eines Computerprogramms, das Programmanweisungen umfasst, die den Prozessor 20 veranlassen, das offenbarte Verfahren (z.B. das Verfahren gemäß dem in Fig. 4 dargestellten Flussdiagramm 400) auszuführen und/oder zu steuern, wenn der Prozessor 20 diese in Programmspeicher 21 gespeicherten Programmanweisungen ausführt.

Der Programmspeicher 21 enthält ferner beispielsweise das Betriebssystem der Vorrichtung 2, das beim Starten der Vorrichtung 2 zumindest teilweise in Hauptspeicher 22 geladen und vom Prozessor 20 ausgeführt wird. Insbesondere wird beim Starten der Vorrichtung 2 zumindest ein Teil des Kerns des Betriebssystems in den Hauptspeicher 22 geladen und von Prozessor 20 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Vorrichtung 2 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher wie Programmspeicher 21 ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher wie Hauptspeicher 22 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 22 und Programmspeicher 21 können auch als ein Speicher ausgebildet sein. Alternativ können Hauptspeicher 22 und/oder Programmspeicher 21 jeweils durch mehrere Speicher gebildet werden. Ferner können Hauptspeicher 22 und/oder Programmspeicher 21 auch Teil des Prozessors 20 sein.

Die Kommunikationsschnittstelle 24 der Vorrichtung 2 kann eine drahtlose oder eine drahtgebundene Kommunikationsschnittstelle sein, wobei im Folgenden beispielhaft von einer drahtgebundenen Kommunikationsschnittstelle ausgegangen wird. Mittels der Kommunikationsschnittstelle 24 kann die Vorrichtung 2 Informationen senden und/oder empfangen.

Beispielsweise kann die Vorrichtung 2 Sensorinformationen von den Umgebungssensoren 12-1 bis 12-7 des unbemannten Fahrzeugs 1 mittels der Kommunikationsschnittstelle 24 empfangen. Darüber hinaus kann die Vorrichtung 2 mittels der Kommunikationsschnittstelle 24 beispielsweise ein Auslösen einer oder mehrerer der Airbagvorrichtungen 13-1 bis 13-3 des unbemannten Fahrzeugs 1 bewirken, indem sie Steuerinformationen an die jeweilige Airbagvorrichtung sendet, um die jeweilige Airbagvorrichtung anzusteuern und das Auslösen der jeweilige Airbagvorrichtung zu steuern. Dabei kann das Auslösen der jeweiligen Airbagvorrichtung derart gesteuert werden, dass es gemäß einem oder mehreren (zuvor bestimmten) Auslöseparametern erfolgt.

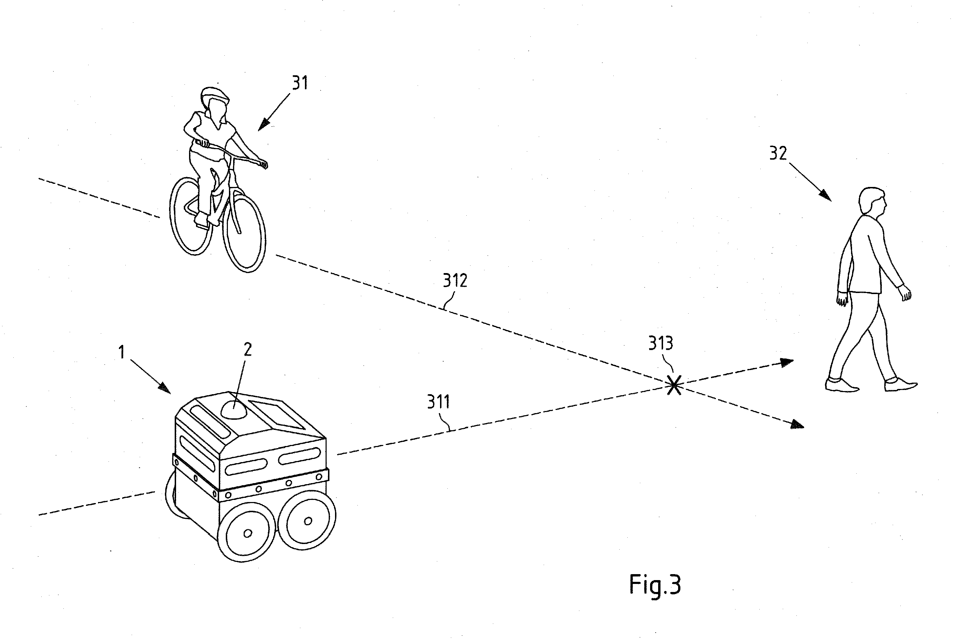

Fig. 3 ist eine schematische Darstellung einer Situation, in der ein Verfahren gemäß der Erfindung ablaufen kann, wobei die Situation beispielsweise das nach Fig. 1 offenbarte unbemannte Fahrzeug 1, das die nach Fig. 2 offenbarte Vorrichtung 2 umfasst, darstellt.

Es wird beispielhaft angenommen, dass sich das unbemannte Fahrzeug 1 automatisch bewegt und einer Person 32 (z.B. einem Paketzusteller) folgt (z.B. in einem follow-me-Modus). Darüber hinaus befindet sich in der Umgebung des unbemannten Fahrzeugs 1 ein Fahrradfahrer 31 (z.B. ein Fahrrad und ein Fahrer des Fahrrads), wobei sich der Fahrradfahrer 31 in Bezug auf das unbemannte Fahrzeug 1 bewegt.

Aufgrund der geringen Größe des unbemannten Fahrzeugs 1 besteht beispielsweise die Gefahr, dass der Fahrradfahrer 31 das unbemannte Fahrzeug 1 übersieht, so dass es in der Folge zu einer Kollision zwischen dem Fahrradfahrer und dem unbemannten Fahrzeug 1 kommen könnte.

Fig. 4 zeigt ein Flussdiagramm 400 eines Ausführungsbeispiels eines Verfahrens gemäß der Erfindung, dessen Verfahrensschritte 401 bis 405 mit Blick auf die in Fig. 3 dargestellte Situation im Folgenden beispielhaft erläutert werden. Dabei wird beispielhaft angenommen, dass die folgenden Verfahrensschritte 401 bis 405 von der Vorrichtung 2 des unbemannten Fahrzeugs 1 ausgeführt werden.

In einem Schritt 401 erhält die Vorrichtung 2 eine Sensorinformation, wobei die Sensorinformation durch zumindest einen Umgebungssensor der Umgebungssensoren 12-1 bis 12-7 des unbemannten Fahrzeugs 1 erfasst wird und zumindest einen Objektparameter des Fahrradfahrers 31 als Objekt, das sich in Bezug auf das unbemannte Fahrzeug 1 bewegt, repräsentiert. Zum Beispiel repräsentiert die Sensorinformation die Entfernung des Fahrradfahrers 31 zu dem unbemannten Fahrzeug 1 als Objektparameter des Fahrradfahrers 31. Es versteht sich, dass in Schritt 401 auch mehrere durch zumindest einen Umgebungssensor der Umgebungssensoren 12-1 bis 12-7 des unbemannten Fahrzeugs 1 erfasste Sensorinformationen erhalten werden können. Zum Beispiel könnten solche mehreren Sensorinformationen die Entfernung des Fahrradfahrers 31 zu dem unbemannten Fahrzeug 1 zu aufeinanderfolgenden Zeitpunkten als Objektparameter des Fahrradfahrers 31 repräsentieren. Wie oben offenbart, kann basierend auf einem solchen zeitlichen Verlauf der Entfernung eine durchschnittliche Differenzgeschwindigkeit des Fahrradfahrers 31, mit der sich der Fahrradfahrer 31 dem unbemannten Fahrzeug nähert oder davon entfernt, bestimmt werden.

In einem Schritt 402 bestimmt die Vorrichtung 2, zumindest teilweise basierend auf dem zumindest einen Objektparameter, der durch die in Schritt 401 erhaltene Sensorinformation repräsentiert wird, ob eine Kollision zwischen dem unbemannten Fahrzeug 1 und dem Fahrradfahrer 31 droht.

Das Bestimmen in Schritt 402 erfolgt beispielsweise gemäß einer oder mehreren (z.B. vorgegebenen) Regeln wie einem Algorithmus oder einem Entscheidungsmodell. Im Folgenden wird beispielhaft angenommen, dass das Bestimmen in Schritt 402 zumindest teilweise basierend auf einem durch maschinelles Lernen erhaltenen Entscheidungsmodell wie einem künstlichen neuronalen Netzwerk oder einer KI basierten Entscheidungsmatrix erfolgt. Dabei erhält das Entscheidungsmodell den zumindest einen Objektparameter, der durch die in Schritt 401 erhaltene Sensorinformation repräsentiert wird, als Eingangsparameter und gibt beispielsweise eine Wahrscheinlichkeit für ein Eintreten einer Kollision zwischen dem unbemannten Fahrzeug 1 und dem Fahrradfahrer 31 als Ausgabeparameter aus. Es versteht sich, dass das Entscheidungsmodell weitere Objektparameter und/oder Fahrzeugparameter als Eingangsparameter erhalten und somit beim Bestimmen der Wahrscheinlichkeit für ein Eintreten einer Kollision zwischen dem unbemannten Fahrzeug 1 und dem Fahrradfahrer 31 berücksichtigen kann.

Wenn die als Ausgangsparameter des Entscheidungsmodells erhaltene Wahrscheinlichkeit für ein Eintreten einer Kollision zwischen dem unbemannten Fahrzeug 1 und dem Fahrradfahrer 31 einen vorgegebenen Schwellwert (z.B. 50 %, 75 % oder 90 %) überschreitet, kann beispielsweise vorgesehen sein, dass in Schritt 402 bestimmt wird, dass eine Kollision zwischen dem unbemannten Fahrzeug 1 und dem Fahrradfahrer 31 droht.

Andernfalls ist beispielsweise vorgesehen, dass in Schritt 402 bestimmt wird, dass keine Kollision zwischen dem unbemannten Fahrzeug 1 und dem Fahrradfahrer 31 droht. In diesem Fall wird das Verfahren in Schritt 403 beispielsweise beendet.

Wenn dagegen in Schritt 402 bestimmt wird, dass eine Kollision zwischen dem unbemannten Fahrzeug 1 und dem Fahrradfahrer 31 droht, wird das Verfahren mit Schritt 404 fortgesetzt.

In Schritt 404 bestimmt die Vorrichtung 2, zumindest teilweise basierend auf dem zumindest einen Objektparameter, der durch die in Schritt 401 erhaltene Sensorinformation repräsentiert wird, zumindest einen Auslöseparameter für ein Auslösen zumindest einer Airbagvorrichtung der Airbagvorrichtungen 13-1 bis 13-3 des unbemannten Fahrzeugs 1. Es versteht sich, dass in Schritt 404 auch mehrere Auslöseparameter bestimmt werden können. Zum Beispiel legen die in Schritt 404 bestimmten Auslöseparameter beispielsweise die Airbagvorrichtung(en) der Airbagvorrichtungen 13-1 bis 13-3, die ausgelöst werden soll(en), und/oder den jeweiligen Auslösezeitpunkt und/oder die jeweilige Auslöseintensität fest.

In der in Fig. 3 beispielhaft dargestellten Situation droht der Fahrradfahrer 31 mit der in Fahrtrichtung gesehen vorderen Außenseite des unbemannten Fahrzeugs 1 zu kollidieren, so dass der Auslöseparameter beispielsweise derart bestimmt wird, dass er festlegt, dass die an dieser Außenseite des unbemannten Fahrzeugs 1 angeordnete Airbagvorrichtung 13-1 ausgelöst werden soll.

Ferner wird ein weiterer Auslöseparameter in Schritt 404 beispielsweise derart bestimmt, dass er den Auslösezeitpunkt derart festlegt, dass die Airbagvorrichtung 13-1 vor der drohenden Kollision ausgelöst wird.

Außerdem wird ein weiterer Auslöseparameter in Schritt 404 bestimmt, der die Auslöseintensität festlegt. Zu diesem Zweck kann beispielsweise vorgesehen sein, dass der Auslöseparameter derart bestimmt wird, dass er festlegt, dass die Airbagvorrichtung 13-1 mit der höheren Auslöseintensität ausgelöst werden soll, wenn sich der Fahrradfahrer 31 dem unbemannten Fahrzeug 1 mit einer durchschnittlichen Differenzgeschwindigkeit größer oder gleich einem vorgegebenen Schwellenwert (z.B. 5 m/s) nähert. Andernfalls kann beispielsweise vorgesehen sein, dass der Auslöseparameter derart bestimmt wird, dass er festlegt, dass die Airbagvorrichtung 13-1 mit der geringeren Auslöseintensität ausgelöst werden soll.

In Schritt 405 erfolgt das Auslösen und/oder Bewirken des Auslösens der zumindest einen Airbagvorrichtung der Airbagvorrichtungen 13-1 bis 13-3 gemäß dem zumindest einen in Schritt 404 bestimmten Auslöseparameter, wobei die zumindest eine Airbagvorrichtung vor der drohenden Kollision ausgelöst wird.

Im vorliegenden Beispiel löst die Vorrichtung 2 in Schritt 405 die Airbagvorrichtung 13-1 gemäß der in Schritt 404 bestimmten Auslöseparameter aus, wobei die Airbagvorrichtung 13-1 vor der drohenden Kollision zwischen dem unbemannten Fahrzeug 1 und dem Fahrradfahrer 31 ausgelöst wird, beispielsweise indem die Vorrichtung 2 die Airbagvorrichtung derart ansteuert, dass die Treibladung(en) der Airbagvorrichtung 13-1 gemäß der in Schritt 404 bestimmten Auslöseparameter gezündet werden.

Das Auslösen der Airbagvorrichtung 13-1 in Schritt 405 vor der drohenden Kollision gemäß der in Schritt 404 bestimmten Auslöseparameter ist besonders vorteilhaft, da ein Schaden als Folge einer drohenden Kollision, für die bezüglich eines unbemannten Fahrzeugs 1 beispielweise aufgrund dessen geringer Größe im Vergleich zu übrigen Straßenverkehrsteilnehmern ein erhöhtes Risiko besteht, besonders effektiv verhindert oder vermindert werden kann. Das Auslösen einer Airbagvorrichtung 13-1 in Schritt 405 kann insbesondere deshalb vorteilhaft sein, da die Airbagvorrichtung 13-1 gemäß dem zumindest einen bestimmten Auslöseparameter zeitlich vor der drohenden Kollision zwischen dem unbemannten Fahrzeug 1 und dem Fahrradfahrer 31 (z.B. zeitlich vor dem physischen Kontakt zwischen dem unbemannten Fahrzeug 1 und dem Fahrradfahrer 31, wenn die drohende Kollision tatsächlich eintritt) ausgelöst wird.

Im Gegensatz zu dem Auslösen einer Airbagvorrichtung als Aufprallkissen in Schritt 405 können gemäß herkömmlichen Auslöseverfahren, wonach Aufprallkissen erst nach einer bereits tatsächlich eingetretenen Kollision zwischen dem unbemannten Fahrzeug 1 und dem Fahrradfahrer 31 ausgelöst werden, die Kollisionsbeteiligten lediglich nach diesem Zeitpunkt des Auslösens und somit lediglich nach einer bereits tatsächlich eingetretenen Kollision vor noch folgenden Kollisionsschäden geschützt werden. Hinsichtlich dieses Auslösens erst nach einer bereits tatsächlich eingetretenen Kollision ist es außerdem denkbar, dass Aufprallkissen gemäß herkömmlichen Auslöseverfahren nicht mehr gemäß einem erforderlichen Auslöseparameter (z.B. gemäß einer erforderlichen Auslöseintensität bspw. in Form einer erforderlichen Geschwindigkeit, mit der sich das Aufprallkissen öffnet) ausgelöst werden können, um vor noch folgenden Kollisionsschäden zu schützen. Vor diesem Hintergrund kann das Auslösen einer Airbagvorrichtung als Aufprallkissen in Schritt 405 zeitlich vor der drohenden Kollision insbesondere deshalb vorteilhaft sein, da eine im Vergleich zu herkömmlichen Auslöseverfahren niedrigere Auslöseintensität (z.B. eine niedrigere Geschwindigkeit, mit der sich das Aufprallkissen öffnet) bereits ausreichen kann, um vor Kollisionsschäden zu schützen.

Im vorliegenden Beispiel versteht es sich, dass trotz des Bestimmens zumindest eines Auslöseparameters in Schritt 404 und des Auslösens der Airbagvorrichtung 13-1 als das zumindest eine Aufprallkissen in Schritt 405 gemäß dem zumindest einen Auslöseparameter ein Kollisionsschaden aufgrund der drohenden Kollision zwischen dem unbemannten Fahrzeug 1 und dem Fahrradfahrer 31 möglichweise nicht verringert oder verhindert wird. Dies kann zum Beispiel aufgrund von Unwägbarkeiten (z.B. Fehlern oder Vereinfachungen beim Bestimmen des zumindest einen Auslöseparameters in Schritt 405 etc.) der Fall sein.

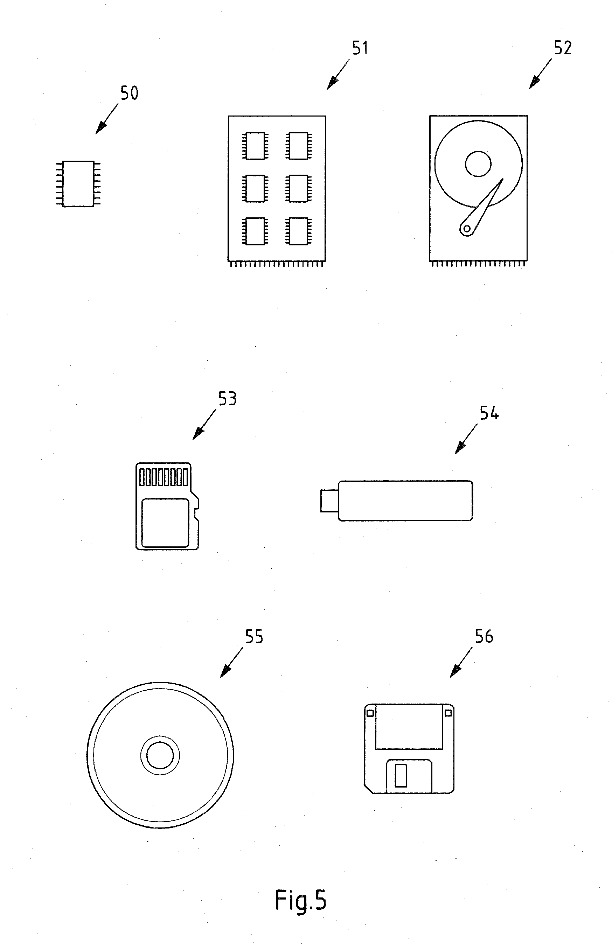

Fig. 5 zeigt schließlich beispielhafte Ausführungsformen von Speichermedien, auf denen ein Ausführungsbeispiel eines erfindungsgemäßen Computerprogramms gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessors 20 der Fig. 2) sein, beispielsweise ein (nicht-flüchtiger oder flüchtiger) Programmspeicher des Prozessors oder ein Teil davon (z.B. Speicher 21 in Fig. 2).

Ausführungsbeispiele eines Speichermediums sind ein Flash-Speicher 50, eine SSD-Festplatte 51, eine magnetische Festplatte 52, eine Speicherkarte 53, ein Memory Stick 54 (z.B. ein USB-Stick), eine CD-ROM oder DVD 55 oder eine Diskette 56.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, ausgeführt von einer Vorrichtung (2), das Verfahren umfassend:
- Erhalten (401) und/oder Bewirken des Erhaltens einer durch zumindest einen Umgebungssensor (12-1) eines unbemannten Fahrzeugs (1) erfassten Sensorinformation, wobei die Sensorinformation zumindest einen Objektparameter eines Objekts (31), das sich in Bezug auf das unbemannte Fahrzeug (1) bewegt, repräsentiert, wobei das unbemannte Fahrzeug (1) am Landverkehr in Fußgängerbereichen auf Gehwegen teilnimmt, wobei das unbemannte Fahrzeug (1) Mittel (10) zum Aufnehmen und Transportieren einer oder mehrerer Güter umfasst, wobei das unbemannte Fahrzeug (1) nicht zum Transport von Personen vorgesehen ist, und wobei das Objekt (31) ein Fahrzeug oder ein Gegenstand in der Umgebung des unbemannten Fahrzeugs (1) ist;
- Bestimmen (402), zumindest teilweise basierend auf dem zumindest einen Objektparameter, ob eine Kollision zwischen dem unbemannten Fahrzeug (1) und dem Objekt (31) droht; und
wenn bestimmt wird, dass eine Kollision zwischen dem unbemannten Fahrzeug (1) und dem Objekt (31) droht:
- Bestimmen (404), zumindest teilweise basierend auf dem zumindest einen Objektparameter, zumindest eines Auslöseparameters für ein Auslösen zumindest eines Aufprallkissens (13-1) des unbemannten Fahrzeugs (1), und
- Auslösen (405) und/oder Bewirken des Auslösens des zumindest einen Aufprallkissens (13-1) gemäß dem zumindest einen Auslöseparameter, wobei das zumindest eine Aufprallkissen (13-1) vor der drohenden Kollision ausgelöst wird.

2. Verfahren gemäß Anspruch 1, wobei das Bestimmen (402), ob eine Kollision zwischen dem unbemannten Fahrzeug (1) und dem Objekt (31) droht, umfasst:
- Bestimmen, zumindest teilweise basierend auf dem zumindest einen Objektparameter, einer Wahrscheinlichkeit für das Eintreten der drohenden Kollision.

3. Verfahren gemäß einem der Ansprüche 1 und 2, wobei das Bestimmen (402), ob eine Kollision zwischen dem unbemannten Fahrzeug (1) und dem Objekt (31) droht, zumindest teilweise basierend auf einem durch maschinelles Lernen erhaltenen Entscheidungsmodell erfolgt.

4. Verfahren gemäß einem der Ansprüche 1 bis 3, wobei das unbemannte Fahrzeug (1) eine Mehrzahl an Aufprallkissen (13-1;13-2;13-3) umfasst

5. Verfahren gemäß Anspruch 4, das Verfahren ferner umfassend:
- Bestimmen, zumindest teilweise basierend auf dem zumindest einen Objektparameter, welches zumindest eine Aufprallkissen der Mehrzahl an Aufprallkissen (13-1;13-2;13-3) ausgelöst werden soll.

6. Verfahren gemäß einem der Ansprüche 1 bis 5, wobei der zumindest eine Auslöseparameter eine Auslöseintensität, ein Auslösevolumen und/oder einen Auslösezeitpunkt für das Auslösen des zumindest einen Aufprallkissens festlegt.

7. Verfahren gemäß einem der Ansprüche 1 bis 6, wobei der zumindest eine Objektparameter des Objekts (31) repräsentiert:
- eine Position des Objekts (31),
- eine Entfernung des Objekts (31) zu dem unbemannten Fahrzeug (1),
- eine Objektklasse des Objekts (31),
- eine Bewegungsrichtung des Objekts (31),
- eine Geschwindigkeit des Objekts (31), und/oder
- eine Beschleunigung des Objekts (31).

8. Verfahren gemäß einem der Ansprüche 1 bis 7, wobei der zumindest eine Umgebungssensor (12-1) des unbemannten Fahrzeugs (1) einer der folgenden Sensoren ist: ein Temperatursensor, ein elektromagnetischer Sensor, ein akustischer oder ein optischer Sensor.

9. Verfahren gemäß einem der Ansprüche 1 bis 8, das Verfahren ferner umfassend:
- Erhalten und/oder Bewirken des Erhaltens einer Fahrzeuginformation, wobei die Fahrzeuginformation zumindest einen Fahrzeugparameter des unbemannten Fahrzeugs (1) repräsentiert, und wobei das Bestimmen (402), ob eine Kollision zwischen dem unbemannten Fahrzeug (1) und dem Objekt (31) droht, zumindest teilweise auf dem zumindest einen Fahrzeugparameter basiert und/oder das Bestimmen (404) des zumindest einen Auslöseparameters für das Auslösen des zumindest einen Aufprallkissens (13-1) des unbemannten Fahrzeugs (1) zumindest teilweise auf dem zumindest einen Fahrzeugparameter basiert.

10. Verfahren gemäß Anspruch 9, wobei die Fahrzeuginformation durch zumindest einen Fahrzeugsensor des unbemannten Fahrzeugs (1) erfasst wird.

11. Verfahren gemäß einem der Ansprüche 9 und 10, wobei der zumindest eine Fahrzeugparameter repräsentiert:
- eine Bewegungsrichtung des unbemannten Fahrzeugs (1),
- eine Geschwindigkeit des unbemannten Fahrzeugs (1), und/oder
- eine Beschleunigung des unbemannten Fahrzeugs (1).

12. Verfahren gemäß einem der Ansprüche 1 bis 11, wobei das unbemannte Fahrzeug (1) ein zumindest teilautonom und/oder automatisch und/oder ferngesteuert fahrendes Fahrzeug ist.

13. Vorrichtung (2), umfassend:
- Mittel (20-24) eingerichtet zur Ausführung des Verfahrens gemäß einem der Ansprüche 1 bis 12 oder umfassend jeweilige Mittel zur Ausführung der Schritte des Verfahrens gemäß einem der Ansprüche 1 bis 12;
- Mittel (10) zum Aufnehmen und Transportieren einer oder mehrerer Güter,
wobei die Vorrichtung:
- ein unbemanntes Fahrzeug (1) ist, wobei das unbemannte Fahrzeug (1) am Landverkehr in Fußgängerbereichen auf Gehwegen teilnimmt, und wobei das unbemannte Fahrzeug (1) nicht zum Transport von Personen vorgesehen ist;
- ein Teil des unbemannten Fahrzeugs (1) ist; oder
- ein Modul für das unbemannte Fahrzeug (1) ist.

14. Computerprogramm, umfassend Programmanweisungen, die dazu ausgebildet sind, bei Ausführung durch mindestens einen Prozessor (20) die Vorrichtung (2) gemäß Anspruch 13 zu veranlassen, das Verfahren gemäß einem der Ansprüche 1 bis 12 auszuführen.

## Claims

1. Method, performed by an apparatus (2), the method including:
- Obtaining (401) and/or causing the obtaining of sensor information captured by at least one environment sensor (12-1) of an unmanned vehicle (1), wherein the sensor information represents at least one object parameter of an object (31) that is moving relative to the unmanned vehicle (1), wherein the unmanned vehicle (1) participates in traffic on land in pedestrian areas on footpaths, wherein the unmanned vehicle (1) comprises means (10) for receiving and transporting one or more goods items, wherein the unmanned vehicle (1) is not intended for the transport of persons, and wherein the object (31) is a vehicle or an object in the environment of the unmanned vehicle (1);
- Determining (402), at least partly based on the at least one object parameter, whether a collision between the unmanned vehicle (1) and the object (31) is imminent; and
if it is determined that a collision between the unmanned vehicle (1) and the object (31) is imminent:
- Determining (404), at least partly based on the at least one object parameter, at least one triggering parameter for triggering at least one crash cushion (13-1) of the unmanned vehicle (1), and
- Triggering (405) and/or causing the triggering of the at least one crash cushion (13-1) according to the at least one triggering parameter, wherein the at least one crash cushion (13-1) is triggered before the imminent collision.

2. Method according to Claim 1, wherein the determining (402) of whether a collision between the unmanned vehicle (1) and the object (31) is imminent includes:
- Determining a probability of the imminent collision occurring, at least partly based on the at least one object parameter.

3. Method according to any one of Claims 1 and 2, wherein the determining (402) of whether a collision between the unmanned vehicle (1) and the object (31) is imminent is performed at least partly based on a decision model obtained by machine learning.

4. Method according to any one of Claims 1 to 3, wherein the unmanned vehicle (1) comprises a plurality of crash cushions (13-1;13-2;13-3).

5. Method according to Claim 4, the method further including:
- Determining, at least partly based on the at least one object parameter, which at least one crash cushion of the plurality of crash cushions (13-1;13-2;13-3) is to be triggered.

6. Method according to any one of Claims 1 to 5, wherein the at least one triggering parameter determines a triggering intensity, a triggering volume, and/or a triggering time for triggering the at least one crash cushion.

7. Method according to any one of Claims 1 to 6, wherein the at least one object parameter of the object (31) represents:
- a position of the object (31),
- a distance of the object (31) from the unmanned vehicle (1),
- an object class of the object (31),
- a direction of movement of the object (31),
- a speed of the object (31), and/or
- an acceleration of the object (31).

8. Method according to any one of Claims 1 to 7, wherein the at least one environment sensor (12-1) of the unmanned vehicle (1) is one of the following sensors: a temperature sensor, an electromagnetic sensor, an acoustic sensor, or an optical sensor.

9. Method according to any one of Claims 1 to 8, the method further including:
- Obtaining and/or causing the obtaining of vehicle information, wherein the vehicle information represents at least one vehicle parameter of the unmanned vehicle (1), and wherein the determining (402) of whether a collision between the unmanned vehicle (1) and the object (31) is imminent is at least partly based on the at least one vehicle parameter and/or the determining (404) of the at least one triggering parameter for the triggering of the at least one crash cushion (13-1) of the unmanned vehicle (1) is at least partly based on the at least one vehicle parameter.

10. Method according to Claim 9, wherein the vehicle information is captured by at least one vehicle sensor of the unmanned vehicle (1).

11. Method according to any one of Claims 9 and 10, wherein the at least one vehicle parameter represents:
- a direction of movement of the unmanned vehicle (1),
- a speed of the unmanned vehicle (1), and/or
- an acceleration of the unmanned vehicle (1).

12. Method according to any one of Claims 1 to 11, wherein the unmanned vehicle (1) is an at least semi-autonomous and/or automatically and/or remotely driven vehicle.

13. Apparatus (2), comprising:
- Means (20-24) configured for performing the method according to any one of Claims 1 to 12 or comprising respective means for performing the steps of the method according to any one of claims 1 to 12;
- means (10) for receiving and transporting one or more goods items
wherein the apparatus:
- is an unmanned vehicle (1), wherein the unmanned vehicle (1) participates in traffic on land in pedestrian areas on footpaths, and wherein the unmanned vehicle (1) is not intended for the transport of persons;
- is part of the unmanned vehicle (1); or
- is a module for the unmanned vehicle (1).

14. Computer program, comprising program instructions, which are designed to cause, when performed by at least one processor (20) the apparatus (2) according to claim 13 to perform the method according to any one of claims 1 to 12.

## Revendications

1. Procédé mis en œuvre par un dispositif (2), le procédé comprenant:
- obtenir (401) et/ou provoquer l'obtention d'une information de capteur détectée par au moins un capteur d'environnement (12-1) d'un véhicule sans équipage (1), l'information de capteur représentant au moins un paramètre d'objet d'un objet (31) qui se meut par rapport au véhicule sans équipage (1), le véhicule sans équipage (1) participant au trafic terrestre dans des zones piétonnes sur de chemins piétons, le véhicule sans équipage (1) comprenant des moyens (10) pour accueillir et transporter une ou plusieurs marchandises, le véhicule sans équipage (1) n'étant pas prévu pour le transport de personnes, et l'objet (31) étant un véhicule ou un objet dans l'environnement du véhicule sans équipage (1);
- déterminer (402), au moins en partie sur la base de l'au moins un paramètre d'objet, si une collision est imminente entre le véhicule sans équipage (1) et l'objet (31); et
lorsqu'il est déterminé qu'une collision entre le véhicule sans équipage (1) et l'objet (31) est imminente:
- déterminer (404), au moins en partie sur la base de l'au moins un paramètre d'objet, au moins un paramètre de déclenchement pour un déclenchement d'au moins un coussin d'impact (13-1) du véhicule sans équipage (1), et
- déclencher (405) et/ou provoquer le déclenchement de l'au moins un coussin d'impact (13-1) selon l'au moins un paramètre de déclenchement, l'au moins un coussin d'impact (13-1) étant déclenché avant la collision imminente.

2. Procédé selon la revendication 1, dans lequel déterminer (402) si une collision est imminente entre le véhicule sans équipage (1) et l'objet (31) comprend :
- déterminer, au moins en partie sur la base de l'au moins un paramètre d'objet, une probabilité que la collision imminente se produise.

3. Procédé selon l'une quelconque des revendications 1 et 2, dans lequel déterminer (402) si une collision est imminente entre le véhicule sans équipage (1) et l'objet (31) a lieu au moins en partie sur la base d'un modèle de décision obtenu par apprentissage machine.

4. Procédé selon l'une quelconque des revendications 1 à 3, dans lequel le véhicule sans équipage (1) comprend une pluralité de coussins d'impact (13-1; 13-2; 13-3).

5. Procédé selon la revendication 4, le procédé comprenant en outre :
- déterminer, au moins en partie sur la base de l'au moins un paramètre d'objet, quel au moins un coussin d'impact de la pluralité de coussins d'impact (13-1; 13-2; 13-3) doit être déclenché.

6. Procédé selon l'une quelconque des revendications 1 à 5, dans lequel l'au moins un paramètre de déclenchement détermine une intensité de déclenchement, un volume de déclenchement et/ou un moment de déclenchement pour le déclenchement de l'au moins un coussin d'impact

7. Procédé selon l'une quelconque des revendications 1 à 6, dans lequel l'au moins un paramètre d'objet de l'objet (31) représente :
- une position de l'objet (31),
- une distance allant de l'objet (31) au véhicule sans équipage (1),
- une classe d'objet de l'objet (31),
- une direction de mouvement de l'objet (31),
- une vitesse de l'objet (31), et/ou
- une accélération de l'objet (31).

8. Procédé selon l'une quelconque des revendications 1 à 7, dans lequel l'au moins un capteur d'environnement (12-1) du véhicule sans équipage (1) est l'un des capteurs suivants : un capteur de température, un capteur électromagnétique, un capteur acoustique ou un capteur optique.

9. Procédé selon l'une quelconque des revendications 1 à 8, le procédé comprenant en outre :
- obtenir (401) et/ou provoquer l'obtention d'une information de véhicule, l'information de véhicule représentant au moins un paramètre de véhicule du véhicule sans équipage (1), et l'étape de déterminer (402) si une collision entre le véhicule sans équipage e (1) et l'objet (31) est imminente étant basée au moins en partie sur l'au moins un paramètre de véhicule et/ou l'étape de déterminer (404) de l'au moins un paramètre de déclenchement pour le déclenchement de l'au moins un coussin d'impact (13-1) du véhicule sans équipage (1) étant basée au moins en partie sur l'au moins un paramètre de véhicule.

10. Procédé selon la revendication 9, dans lequel l'information de véhicule est acquise par au moins un capteur de véhicule du véhicule sans équipage (1).

11. Procédé selon l'une quelconque des revendications 9 et 10, dans lequel l'au moins un paramètre du véhicule représente :
- une direction de mouvement du véhicule sans équipage (1),
- une vitesse du véhicule sans équipage (1), et/ou
- une accélération du véhicule sans équipage (1).

12. Procédé selon l'une quelconque des revendications 1 à 11, dans lequel le véhicule sans équipage (1) est un véhicule se mouvant de manière au moins partiellement autonome et/ou automatique et/ou télécommandée.

13. Dispositif (2) comprenant:
- des moyens (20-24) configurés pour la mise en œuvre du procédé selon l'une quelconque des revendications 1 à 12 ou comprenant des moyens respectifs pour la mise en œuvre des étapes du procédé selon l'une quelconque des revendications 1 à 12;
- des moyens (10) pour accueillir et transporter une ou plusieurs marchandises,
le dispositif:
- étant un véhicule sans équipage (1), le véhicule sans équipage (1) participant à la circulation terrestre dans des zones piétonnes sur des chemins piétons, et le véhicule sans équipage (1) n'étant pas prévu pour le transport de personnes ;
- faisant partie du véhicule sans équipage (1); ou
- étant un module pour le véhicule sans équipage (1).

14. Programme d'ordinateur comprenant des instructions de programme configurées pour, lorsqu'elles sont exécutées par au moins un processeur (20), amener le dispositif (2) selon la revendication 13 à mettre en œuvre le procédé selon l'une quelconque des revendications 1 à 12.
